(19) Europäisches Patentamt
European Patent Office
Office européen des brevets

(11) **EP 1 890 407 A2**

(12) **EUROPEAN PATENT APPLICATION**

(43) Date of publication:
**20.02.2008 Bulletin 2008/08**

(51) Int Cl.:
***H04B 17/00*** (2006.01)

(21) Application number: **06127319.9**

(22) Date of filing: **28.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **16.08.2006 JP 2006221840**

(71) Applicant: **Fujitsu Ltd.**
**Kawasaki-shi, Kanagawa 211-8588 (JP)**

(72) Inventor: **Takahashi, Mamoru**
**c/o Fujitsu Ltd.,**
**Kawasaki-shi, Kanagawa 211-8588 (JP)**

(74) Representative: **Wilding, Frances Ward**
**Haseltine Lake**
**Lincoln House**
**300 High Holborn**
**London WC1V 7JH (GB)**

(54) **Fault detecting device and fault detecting method for base station and for mobile terminal**

(57)     The fault detecting device for a base station including a plurality of baseband processing means (1...N) each executing signal processing of a set call allocated thereto, comprises a plurality of monitoring means, provided in each of the plurality of baseband processing means, counting a cumulative call count and an abnormal call count therein, which are set in the target baseband processing means, based on information used for transmission power control related to uplink channel of a set call allocated to the target baseband processing means, and a judging means collecting the abnormal call count and the cumulative call count of each baseband processing means that are obtained by each monitoring means, and judging a fault-occurred baseband processing means in the plurality of baseband processing means based on the collected abnormal call count and the collected cumulative call count.

*FIG. 1*

**EP 1 890 407 A2**

**Description**

BACKGROUND OF THE INVENTION

1. Field of the invention

The present invention relates to a fault detecting device and to a fault detecting method for a signal processing unit in a base station and a mobile terminal.

2. Description of the related art

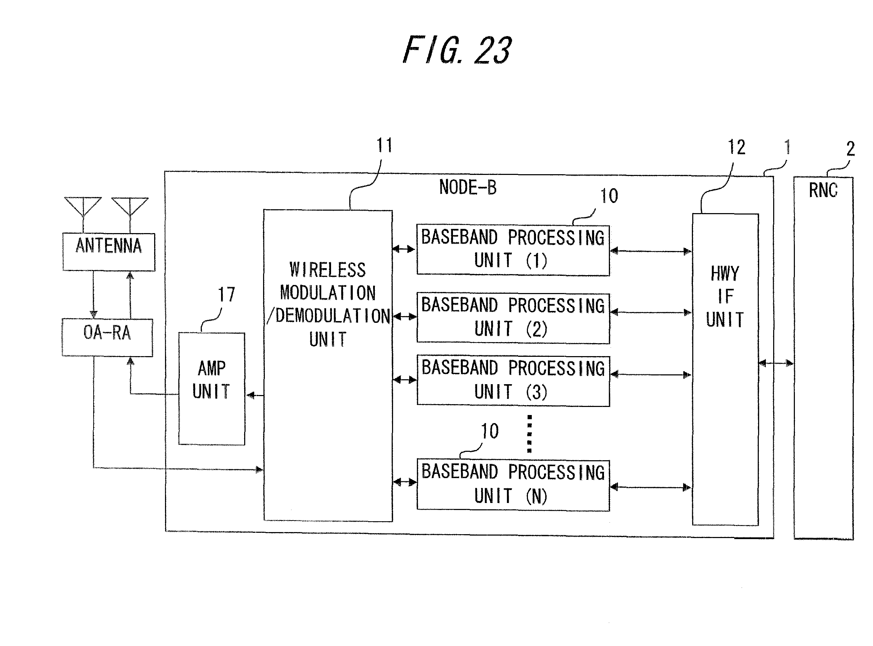

A radio access network is configured by a logical node such as a node B (Node-B) corresponding to a base station and a radio network controller (which will hereinafter be abbreviated to RNC) that has functions such as radio resource control (RRC) and radio link control (RLC) and controls the base station. FIG. 23 is a diagram illustrating an example of a system architecture peripheral to the node B in a CDMA (Code Division Multiple Access) mobile communication system.

As shown in FIG. 23, the node B includes a plurality of baseband processing units, corresponding to a call setting capacity of the node B itself. Each baseband processing unit 10 executes respectively, with respect to each call setting, a spreading/despreading process, a coding/decoding process, etc between a wireless modulation/demodulation unit 11 and a highway interface unit 12. The highway interface unit 12 is in charge of an interface function between the node B and the RNC corresponding to a high-order processing layer above the node B, and the wireless modulation/ demodulation unit 11 modulates transmission signals (downlink signals) and demodulates reception signals (uplink signals).

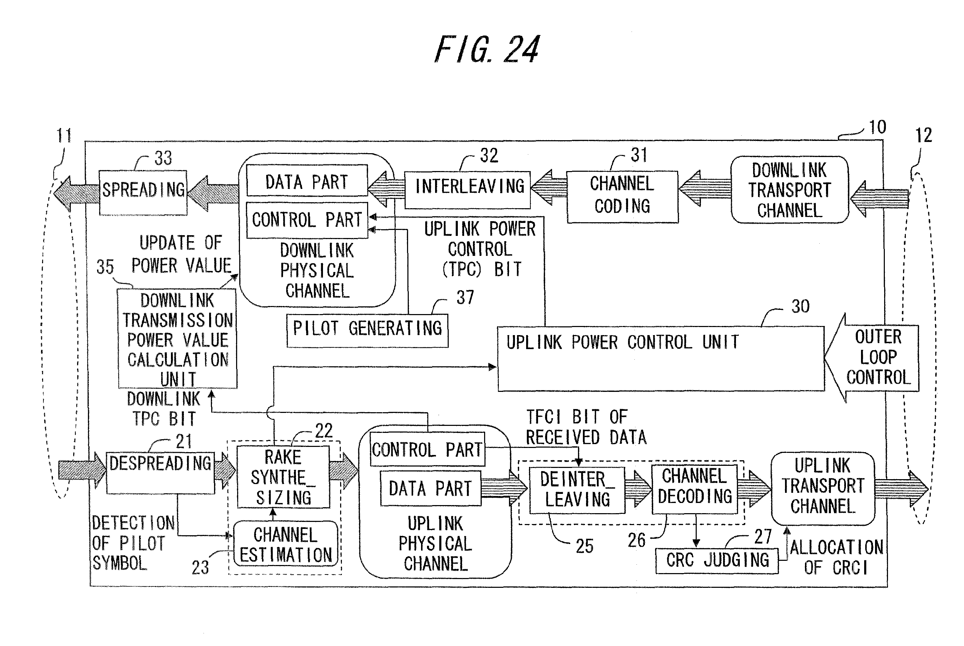

FIG. 24 is a diagram showing a functional configuration of the baseband processing unit 10 in the node B. Each baseband processing unit 10 includes a despreading unit 21, a RAKE synthesizing unit 22, a channel estimation unit 23, a deinterleaving unit 25, a channel decoding unit 26, a CRC (cyclic redundancy check) judging unit 27, an uplink power control unit 30, a channel coding unit 31, an interleaving unit 32, a spreading unit 33, a downlink transmission power value calculation unit 35, a pilot generation unit 37, etc.

Uplink demodulated signals transmitted from the wireless modusation/demodulation unit 11 are despread with a predetermined code by the despreading unit 21 and are sent to the RAKE synthesizing unit 22. Further, a pilot symbol is detected from signals obtained by despreading the demodulated signals, and the channel estimation unit 23 performs channel estimation based on this detected pilot symbol. Then, the RAKE synthesizing unit 22 corrects the respective signals propagated via multi-paths with the channel estimated value (phase correction, amplitude correction, etc) and weight-synthesizes the corrected signals (RAKE synthesization). Data (TPC (Transmit Power Control) bit) for transmission power control, which is contained in an uplink physical channel control signal thus outputted from the RAKE synthesizing unit 22, is transmitted to the downlink transmission power value calculation unit 35, and TFCI (Transport Format Combination Indicator) serving as received data format information contained in the same control signal is sent to the deinterleaving unit 25. Further, the detected pilot symbol is sent to the uplink power control unit 30.

The data signals of the uplink physical channel, which are outputted from the RAKE synthesizing unit 22, are deinterleaved by the deinterleaving unit 25 in a way that uses the TFCI, and are segmented into respective transport blocks for transmitting to the high-order processing layer. Each transport block is decoded by the channel decoding unit 26. The CRC judging unit 27 judges a cyclic redundancy check (CRC) bit contained in each of the decoded transport blocks. Finally, the decoded transport block and a CRC judgment result (CRCI) are sent to the RNC defined as the high-order processing layer via the highway interface unit 12.

On the other hand, when the transport blocks aggregating the downlink transmission signals are sent from the RNC via the highway interface unit 12, these respective transport blocks are coded by the channel coding unit 31 and are interleaved by the interleaving unit 32 in a predetermined format, resulting in the signals transmitted through the downlink physical channel. These signals are spread by the spreading unit 33 with a predetermined code and transmitted to the wireless modulation/demodulation unit 11.

At this time, the downlink transmission signals undergo setting of a TPC bit value sent from the uplink power control unit 30 and setting of the pilot signal transmitted from the pilot generation unit 37, and are given transmission power corresponding to a transmission power value sent from the downlink transmission power value calculation unit 35.

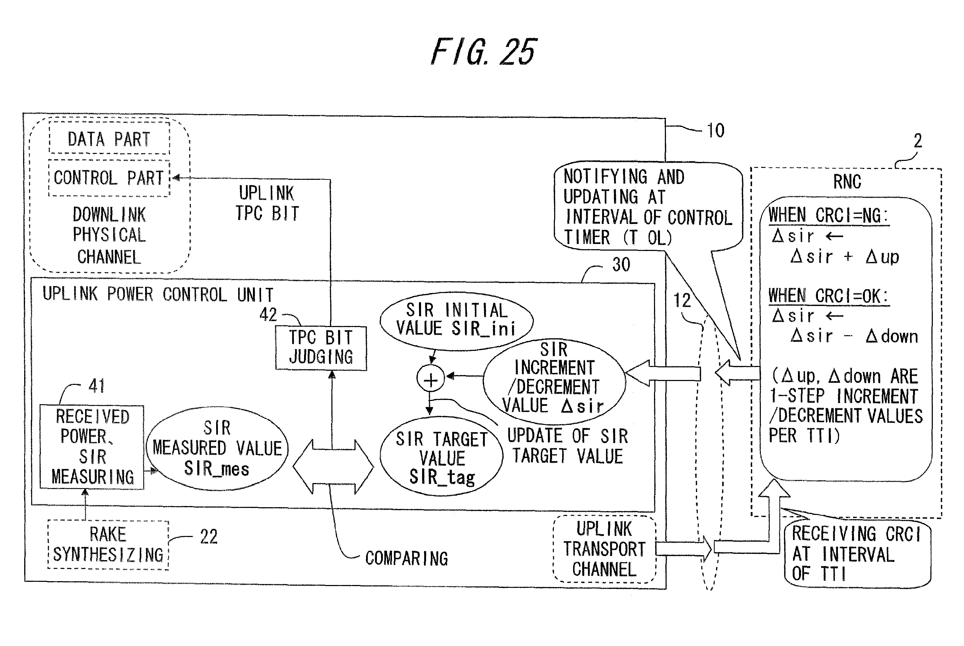

Thus, in the node B, inner loop control and outer loop control are conducted as the transmission power control. FIG. 25 is a diagram showing this type of transmission power control. The inner loop control and the outer loop control will hereinafter be described in detail with reference to FIG. 25.

To begin with, the inner loop control will be explained. The uplink power control unit 30 measures the received power of the pilot symbol transmitted from the RAKE synthesizing unit 22, and calculates an SIR (Signal to Interference Ratio) value. The uplink power control unit 30 compares the calculated SIR measured value with an SIR target value

2

retained therein, thereby obtaining the TPC bit value used for the transmission power control of the uplink signals. To be specific, the TPC bit value (0) indicating that the uplink transmission power be decreased is acquired if the SIR measured value is larger than the SIR target value, and the TPC bit value (1) indicating that the uplink transmission power be increased is acquired if the SIR measured value is smaller than the SIR target value. The thus-acquired TPC bit values are set in the downlink transmission signals. With this setting, in a terminal receiving the downlink signals, the transmission power of the uplink signals is controlled corresponding to the TPC bit value.

Next, the outer loop control will be explained. In the inner loop control described above, the uplink power control unit 30 compares the SIR measured value with the SIR target value, and thus determines the TPC bit value. The outer loop control involves updating this SIR target value into a proper value at a predetermined cycle.

Specifically, in the RNC 2, the CRCI is detected based on the unit of the received transport block, an SIR increment/decrement value ($\Delta$sir) is incremented by a predetermined increment value ($\Delta$up) if the CRCI indicates an error and is decremented by a predetermined decrement value ($\Delta$down) if the CRCI indicates normality. The RNC 2 notifies the node B of the thus-obtained SIR increment/decrement values at a predetermined control timer (T_OL) cycle. These SIR increment/decrement values are transmitted to the uplink power control unit 30 of the baseband processing unit 10. The uplink power control unit 30 adds the SIR increment/decrement value ($\Delta$sir) to a previously-retained SIR initial value (SIR ini), thereby obtaining an SIR target value (SIR_tag). Hereafter, it follows that the inner loop control utilizes this SIR target value.

By the way, in this type of node B device, if an abnormal phenomenon occurs due to a fault caused in a specified function unit, the abnormal portion is detected in the device, and the control of stopping the operation of the fault-occurred function unit is conducted so as not to hinder the operation. Moreover, in the case of thus detecting the fault, a maintenance section of the node B is notified of this purport via a high-order network from the node B.

A fault of the baseband processing unit 10 in the node B is detected mainly by a single test that is periodically implemented. The periodical single test involves using a method of letting a testing signal generated within the baseband processing unit 10 coarsely through the interior of the baseband processing unit 10 and collating a result with an expected value. According to this method, it is possible to conduct an in-depth check of the fault-occurred portion of the baseband processing unit.

It should be noted that a technology disclosed in the following document is given as the conventional art related to the invention of the present application. The conventional art document is "Japanese Patent Application Laid-Open Publication No.2004-364323."

The periodical single test adopted as the fault detecting method in the node B described above has a necessity of temporarily stopping the operation of the testing target baseband processing unit. Accordingly, in this method, such a problem arises that the fault detection for the normal operation of the node B leads conversely to a decrease in operating efficiency of the node B.

Moreover, a method of detecting the fault from a signal-through status of the normal operation call is employed as another fault detecting method, however, this conventional method leads to a problem that the fault (abnormality) of the detailed portion can not be detected.

Hence, in the present state, if required to detect the fault of the detailed portion of the signal processing unit, the implementation of the periodical single test described above is indispensable.

SUMMARY OF THE INVENTION

It is an object of the present invention to provide a fault detecting device and a fault detecting method for a base station and for a mobile terminal, which are capable of detecting an in-depth fault while keeping the operating status of the signal processing unit.

The present invention adopts the following configurations in order to solve the problems. Namely, the present invention is a fault detecting device, for a base station including a plurality of baseband processing means each executing signal processing of a set call allocated thereto, comprising a plurality of monitoring means, provided in the respective baseband processing means, counting a cumulative call count and an abnormal call count therein, which are set in the target baseband processing means, based on information used for transmission power control related to uplink channel of a set call allocated to the target baseband processing means, and a judging means collecting the abnormal call count and the cumulative call count of each baseband processing means that are obtained by each monitoring means, and judging a fault-occurred baseband processing means in the plurality of baseband processing means based on the collected abnormal call count and the collected cumulative call count.

In the present invention, the plurality of monitoring means provided for the respective baseband processing means and the judging means detect the fault-occurred baseband processing means in the plurality of baseband processing means. On the occasion of this detection, each monitoring means counts, based on the information used for the transmission power control about the uplink channel of the set call allocated to the target baseband processing means, the cumulative call count and the abnormal call count therein that are set in the target baseband processing means, and judges the fault-occurred baseband processing means based on these items of information.

With this operation, according to the present invention, in the normal operating state of the baseband processing means, the fault-occurred baseband processing means can be detected. Accordingly, on the occasion of detecting the fault of the signal processing unit, there is neither the necessity of stopping the operation of the signal processing unit nor the decrease in operating rate of the signal processing unit.

Further, according to the present invention, the abnormal call is monitored based on the information used for the transmission power control of the baseband processing means, then the fault-occurred baseband processing means is detected based on the cumulative call count and the abnormal call count given as the result of this monitoring, and hence it is possible to detect the in-depth fault of each of the baseband processing means.

Moreover, according to a first aspect of the fault detecting device for the base station, the information used for the transmission power control is transmission power control information set in downlink signals related to the set call allocated to the target baseband processing means.

Still further, each of the monitoring means includes a calculating means calculating a transmission power increment/decrement value corresponding to the transmission power control information, a counting means referring to the transmission power increment/decrement value at a predetermined cycle, and counting an abnormality count with which the transmission power increment/decrement value when referred to becomes larger than a predetermined threshold value and a normality count other than the abnormality count, respectively, and a judging means judging, as an abnormal call, such a call that the abnormality count becomes larger than a predetermined threshold value before the normality count gets larger than a predetermined threshold value, based on the abnormality count and the normality count obtained by the counting means.

The transmission power control information is, for example, a TPC bit. According to the present invention, the call, causing a phenomenon that the transmission power increment/decrement value extremely increases, is judged to be the abnormal call in a way that uses the transmission power increment/decrement value defined as a result of the indication by the transmission power control information serving as the indicating information of the transmission power control of the uplink channel.

This is because the transmission power value of the uplink signals is estimated extremely low, a signal-to-interference ratio (SIR) measured value is always lower than the SIR target value, so that such a phenomenon is detected that the transmission power control information allocated to the downlink channel continues to be set to a value which increases the transmission power, and this type of call is called the abnormal call.

Yet further, according to a second aspect of the fault detecting device for the base station, the information used for the transmission power control is an increment/decrement value of a signal-to-interference power ratio used for the transmission power control with respect to uplink channel of a set call allocated to the target baseband processing means.

Moreover, each of the monitoring means includes a counting means referring to the increment/decrement value of the signal-to-interference power ratio at a predetermined cycle, and counting an abnormality count with which the increment/decrement value of the signal-to-interference power ratio when referred to is larger than when referred to last time and larger than a predetermined threshold value, and a normality count other than the abnormality count, respectively, and a judging means judging, as an abnormal call, such a call that the abnormality count becomes larger than a predetermined threshold value before the normality count becomes larger a predetermined threshold value, based on the abnormality count and the normality count obtained by the counting means.

In the present invention, the call, causing a phenomenon that the increment/decrement value of the signal-to-interference power ratio consecutively extremely rises, is judged to be the abnormal call in a way that uses the increment/decrement value of the signal-to-interference power ratio outputted in the so-called outer loop control.

This is a scheme in which if "NG" occurs frequently in the CRC judgment of the transport block under the outer loop control, this event is judged as the fault of the decoding processing unit of the uplink physical channel based on such a characteristic that the increment/decrement value of the signal-to-interference power ratio consecutively rises.

Moreover, the present invention is a fault detecting device for a mobile terminal, detecting a fault of a mobile terminal performing wireless communications in a way that switches over a base station becoming a communication partner, comprising a monitoring means counting a cumulative call count, an abnormal call count therein and an abnormal radio link count that are set in baseband processing means, based on information used for transmission power control related to a downlink channel between the mobile terminal itself and the base station as the communication partner, and a judging means judging a fault of the mobile terminal itself based on the abnormal call count, the cumulative call count and the abnormal radio link count obtained by the monitoring means.

In the present invention, on the occasion of detecting the fault of the mobile terminal, in addition to the information in the fault detecting device for the base station, the abnormal radio link count is further taken into consideration.

Hence, according to the present invention, it is possible to properly judge which side, the base station or the mobile terminal, the fault occurs in.

It should be noted that the present invention may also be a method executed by any of the functions described above, may further be a program making a computer actualize any of the functions described above, and may still further be a readable-by-computer storage medium recording such a program.

According to the present invention, it is feasible to actualize the fault detecting device and the fault detecting method for the base station and for the mobile terminal, which are capable of detecting the in-depth fault while keeping the operating status of the signal processing unit.

BRIEF DESCRIPTION OF THE DRAWINGS

FIG. 1 is a diagram showing a system architecture of a mobile communication system in a first embodiment;
FIG. 2 is a diagram showing a functional configuration of a baseband processing unit in the first embodiment;
FIG. 3 is a diagram showing a functional configuration of an uplink power control unit in the first embodiment;
FIG. 4 is a diagram showing a processing concept of an inner loop monitoring unit;
FIG. 5 is a diagram showing an example of updating TPC_OK value and TPC_NG value in the inner loop monitoring unit;
FIG. 6 is a diagram showing a functional configuration of a baseband resource management unit in the first embodiment;
FIG. 7 is a diagram showing a functional configuration of the baseband resource management unit in a second embodiment;
FIG. 8 is a diagram showing a functional configuration of the uplink power control unit in the second embodiment;
FIG. 9 is a diagram showing a processing concept of an outer loop monitoring unit;
FIG.10 is a diagram showing a first example of updating SIR_OK value and SIR_NG value in the outer loop monitoring unit;
FIG.11 is a diagram showing a second example of updating SIR_OK value and SIR_NG value in the outer loop monitoring unit;
FIG.12 is a diagram showing a third example of updating SIR_OK value and SIR_NG value in the outer loop monitoring unit;
FIG.13 is a diagram showing a functional configuration of the baseband resource management unit in the second embodiment;
FIG. 14 is a diagram showing an example of a system architecture of the mobile communication system in a third embodiment;
FIG.15 is a diagram showing an example of a functional configuration of the mobile terminal in the third embodiment;
FIG.16 is a diagram showing a functional configuration of the baseband processing unit of the mobile terminal in the third embodiment;
FIG.17 is a diagram showing functional configurations of a downlink power control unit and an outer loop control unit of the mobile terminal in the third embodiment;
FIG. 18 is a diagram showing a processing concept of an inner loop monitoring unit of the mobile terminal in the third embodiment;
FIG. 19 is a diagram showing a functional configuration of a fault detecting unit in the third embodiment;
FIG. 20 is a diagram showing a functional configuration of the baseband processing unit of the mobile terminal in a fourth embodiment;
FIG.21 is a diagram showing a processing concept of the outer loop monitoring unit of the mobile terminal in the fourth embodiment;
FIG.22 is a diagram showing a functional configuration of the fault detecting unit in the fourth embodiment;
FIG.23 is a diagram showing an example of a system architecture peripheral to a node B in a conventional CDMA mobile communication system;
FIG.24 is a diagram showing a functional configuration of a baseband processing unit in a conventional node B; and
FIG.25 is a diagram showing conventional transmission power control.

DESCRIPTION OF THE PREFERRED EMBODIMENTS

A mobile communication system in each of embodiments of the present invention will hereinafter be described with reference to the drawings. It should be noted that configurations in the following embodiments are exemplifications, and the present invention is not limited to the configurations in the embodiments.

[First Embodiment]

The mobile communication system in a first embodiment of the present invention will hereinafter be explained.

[System Architecture]

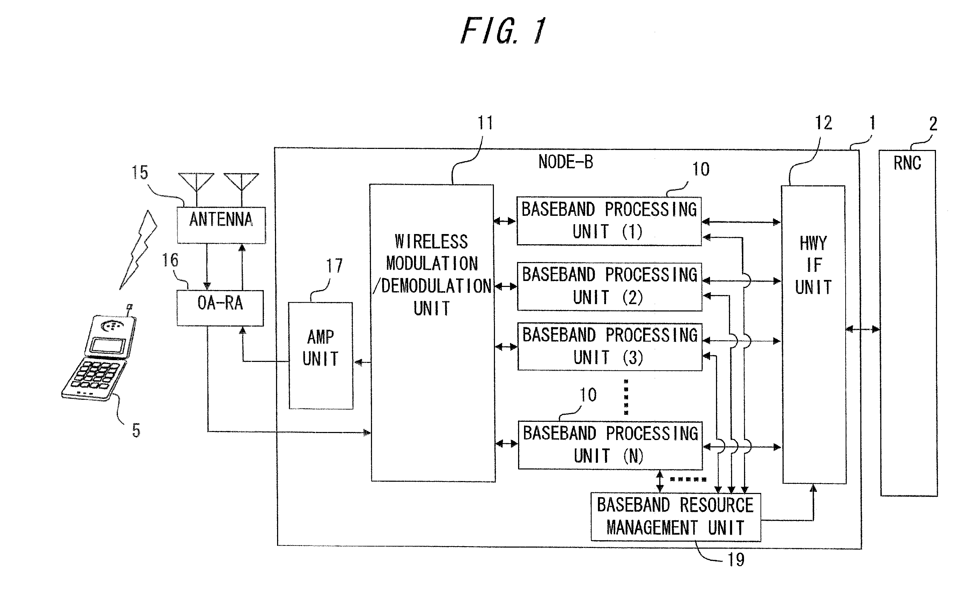

To begin with, a system architecture of the mobile communication system in the first embodiment will be described with reference to FIG. 1. FIG. 1 is a block diagram showing the system architecture of the mobile communication system in the first embodiment.

The mobile communication system in the first embodiment is configured by connecting a base station device including an antenna 15, an open air receiver amplifier 16, a node B (Node-B) 1, etc, to a radio network controller (which will hereinafter be abbreviated to RNC) 2 that controls the base station device via a network. Then, a mobile terminal (which will hereinafter be abbreviated to UE) 5 performs communications with the base station device, thereby connecting to the mobile communication system in the first embodiment. Respective devices configuring the mobile communication system and the UE 5 in the first embodiment will hereinafter be individually explained.

<Base Station Device>

The base station device includes the antenna 15, the open air receiver amplifier (OA-RA) 16, the node B (Node-B) 1, etc. in the base station device, a signal received by the antenna 15 is amplified by the OA-RA 16 and transmitted to the node B1. Further, a transmission signal to a user is outputted from the node B and transmitted from the antenna 15 via the OA-RA 16.

<<Node B>>

The node B1 is, as a hardware configuration, constructed of circuits (IC chips etc) actualizing the respective function units that will be given as below. Note that the node B1 has a CPU (Central Processing Unit), a memory, an input/output interface, etc and may also be configured to actualize the following individual function units in such a way that the CPU executes a program stored in the memory.

The node B1 includes an amplifier unit 17, a wireless modulation/demodulation unit 11, baseband processing units 10 ((1) - (N)), a highway interface unit 12, a baseband resource management unit 19, etc.

The wireless modulation/demodulation unit 11, when receiving received signals (uplink signals) outputted from the OA-RA 16, demodulates the signals by a predetermined method, and transmits the demodulated signals respectively to the baseband processing units 10. On the other hand, when receiving transmission signals (downlink signals) outputted respectively from the baseband processing units 10, the wireless modulation/demodulation unit 11 modulates the signals by a predetermined method, and transmits the modulated signals to the amplifier unit 17. The amplifier unit 17 converts the modulated signals into signals having a radio frequency, and transmits the converted signals to the OA-RA 16.

The highway interface unit 12 is in charge of an interface function between the node B1 and the RNC 2 corresponding to a higher-order processing layer of the node B1.

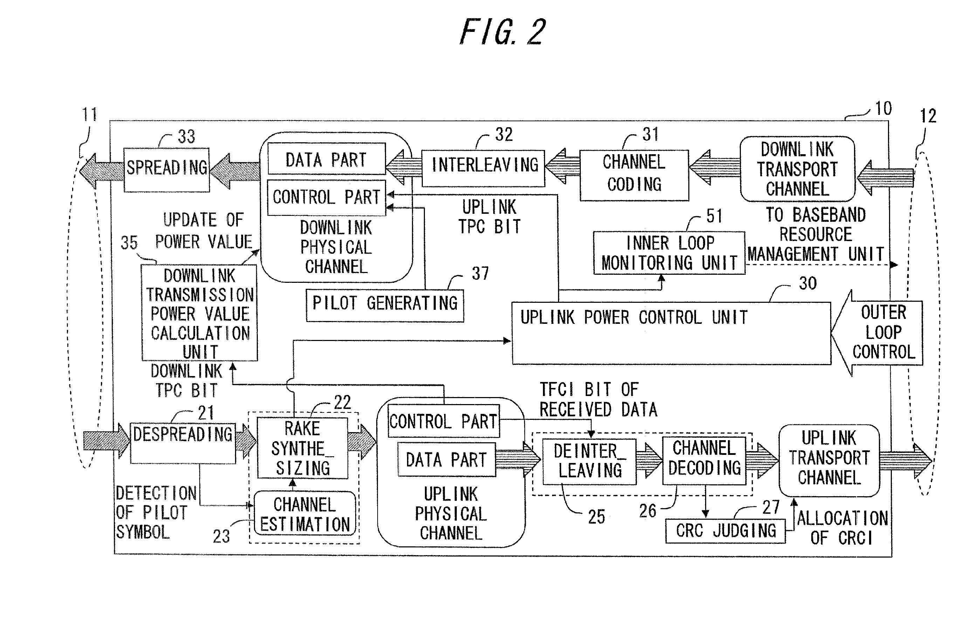

Provided are the baseband processing units 10 of which the number (N-pieces of units) corresponding to a call setting capacity of the node B1. The baseband processing unit 10 will hereinafter be described in detail with reference to FIG. 2. FIG. 2 is a block diagram showing a functional configuration of the baseband processing unit 10. Each baseband processing unit 10 has a despreading unit 21, a RAKE synthesizing unit 22, a channel estimation unit 23, a deinterleaving unit 25, a channel decoding unit 26, a CRC (cyclic redundancy check) judging unit 27, an uplink power control unit 30, a channel coding unit 31, an interleaving unit 32, a spreading unit 33, a downlink transmission power value calculation unit 35, a pilot generation unit 37, an inner loop monitoring unit 51, etc. The baseband processing unit 10 in the first embodiment has, unlike the conventional baseband processing unit shown in FIG. 24, an addition of the inner loop monitoring unit 51. The function units other than this inner loop monitoring unit 51 are the same as in the conventional art, and hence their explanations are herein omitted. Moreover, in the first embodiment, the wireless communications between the UE 5 and the base station device are exemplified by giving a case of utilizing the CDMA (Code Division Multiple Access) method as a multiplexing method, however, the present invention is not limited to this type of multiplexing method.

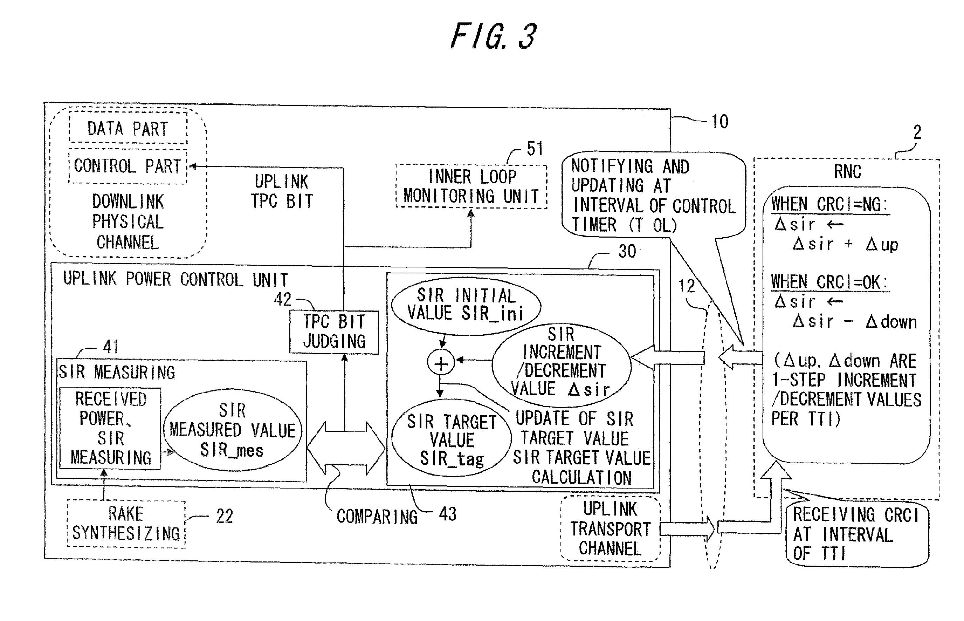

The uplink power control unit 30 as the function unit related to the inner loop monitoring unit 51 will hereinafter be explained with reference to FIG. 3. FIG. 3 is a block diagram showing a functional configuration of the uplink power control unit 30 in the first embodiment. The uplink power control unit 30 has an SIR measuring unit 41, an SIR target value calculation unit 43, a TPC bit judging unit 42, etc. The SIR measuring unit 41 measures received power of a pilot symbol sent from the RAKE synthesizing unit 22, and calculates an SIR (Signal to Interference Ratio). The SIR measured value (SIR_mes) measured by the SIR measuring unit 41 is sent to the TPC bit judging unit 42.

The SIR target value calculation unit 43 receives an SIR increment/decrement value (Δsir) obtained by the RNC 2 under outer loop control via the highway interface unit 12. This SIR increment/decrement value (Δsir) is sent from the RNC 2 at an interval of a control timer (T_OL) cycle. When this SIR increment/decrement value (Δsir) is sent, the SIR target value calculation unit 43 adds up an SIR initial value (SIR ini) retained previously in the memory etc and this SIR increment/decrement value (Δsir), thereby calculating a new SIR (SIR_tag). With this operation, the TPC bit judging unit 42 determines a TPC bit on the basis of the calculated new SIR (SIR_tag). Note that the control timer (T_OL) is set to, e.g., 10 sec as a set value of the outer loop control. The present invention does not limit the set value of this control timer (T_OL).

The TPC bit judging unit 42 compares the SIR measured value (SIR_mes) calculated by the SIR measuring unit 41 with the SIR target value (SIR_tag) calculated by the SIR target value calculation unit 43, thereby obtaining a TPC bit value used for transmission power control of the uplink signals. To be specific, there are obtained the TPC bit value (0) representing that the uplink transmission power be decreased if the SIR measured value is larger than the SIR target value and obtained the TPC bit value (1) representing that the uplink transmission power be increased if the SIR measured value is smaller than the SIR target value. The thus-obtained TPC bit value is set in the downlink transmission signal and is, in addition, transmitted to the inner loop monitoring unit 51.

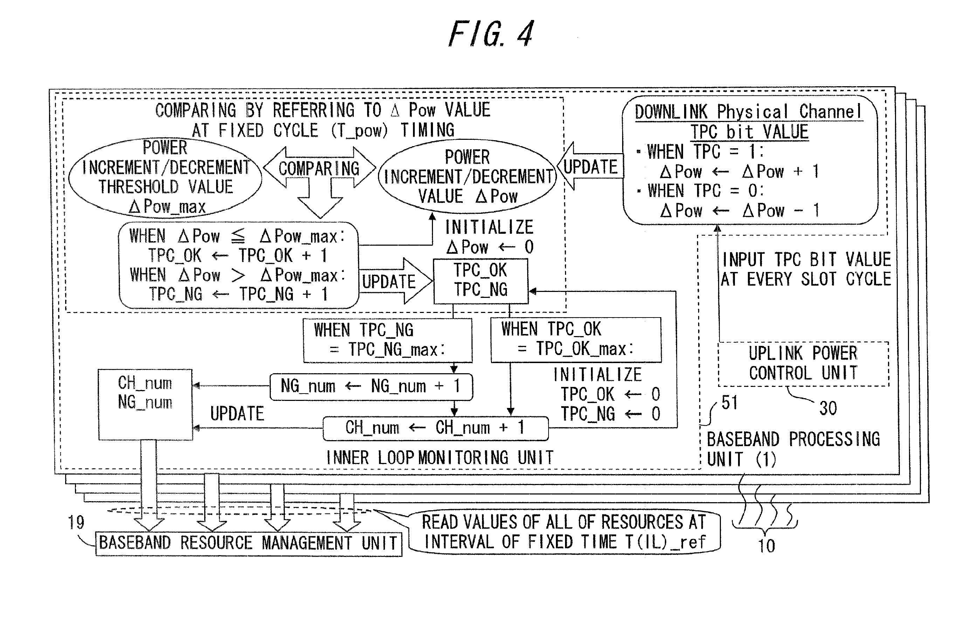

The inner loop monitoring unit 51 will be explained with reference to FIG. 4. FIG. 4 is a diagram showing a processing concept of the inner loop monitoring unit 51. The inner loop monitoring unit 51 is provided in each baseband processing unit 10 and executes detection of a fault in a predetermined function unit in the following manner. The function units of which faults are detected by the inner loop monitoring unit 51 are, for example, the channel estimation unit 23 and the RAKE synthesizing unit 22 as the processing units posterior to the despreading unit 21.

The inner loop monitoring unit 51 receives the TPC bit value outputted from the uplink power control unit 30 at a slot cycle, and updates a power increment/decrement value (ΔPow) on the basis of this TPC bit value. An initial value of the power increment/decrement value is set to "0", and this power increment/decrement value is updated as below any time at a slot cycle interval.

```
When the TPC bit value = 1, ΔPow <== ΔPow + 1


When the TPC bit value = 0, ΔPow <== ΔPow − 1
```

For example, if the functions of the channel estimation unit 23 and of the RAKE synthesizing unit 22 serving as the fault detecting targets do not normally operate, and even if the transmission power of the signal transmitted from the UE 5 rises depending on the TPC bit value set in the downlink signal, a desired high SIR value is not acquired. From this, it follows that the TPC bit value set in the down link signal continues to be set to "1", and hence the power increment/decrement value (ΔPow) resultantly rises any time.

The inner loop monitoring unit 51 reads the power increment/decrement value (ΔPow) at that point of time at an interval of fixed time (T_pow), and compares this value (ΔPow) with a power increment/decrement threshold value (ΔPow_max) retained beforehand in the memory etc. The inner loop monitoring unit 51 updates a TPC_OK value or TPC_NG value, corresponding to a result of this comparison. Specifically, if the power increment/decrement value (ΔPow) becomes equal to or smaller than the power increment/decrement threshold value (ΔPow_max), the TPC_OK value is incremented by 1. If the power increment/decrement value (ΔPow) gets larger than the power increment/decrement threshold value (ΔPow_max), the TPC NG value is incremented by 1. Note that the TPC_OK value and the TPC_NG value are each set to an initial value "0" when establishing uplink synchronization after setting a call.

Herein, the power increment/decrement threshold value (ΔPow_max) is a value designated as a threshold value of the power increment/decrement value (ΔPow) deemed to have an abnormally large number of times when the TPC bit value set in the down link becomes "1" in the fixed time (T_pow). When a maximum slot count of a downlink physical channel transmissible in the fixed time (T_pow) is set to N_slot, the power increment/decrement threshold value (ΔPow_max) is required to satisfy the following condition.

```
1 << ΔPow_max < N_slot (where N_slot = 1500 x T_pow)
```

After the TPC_OK value and the TPC_NG value have been updated, the same process is repeated at the interval of the fixed time (T_pow).

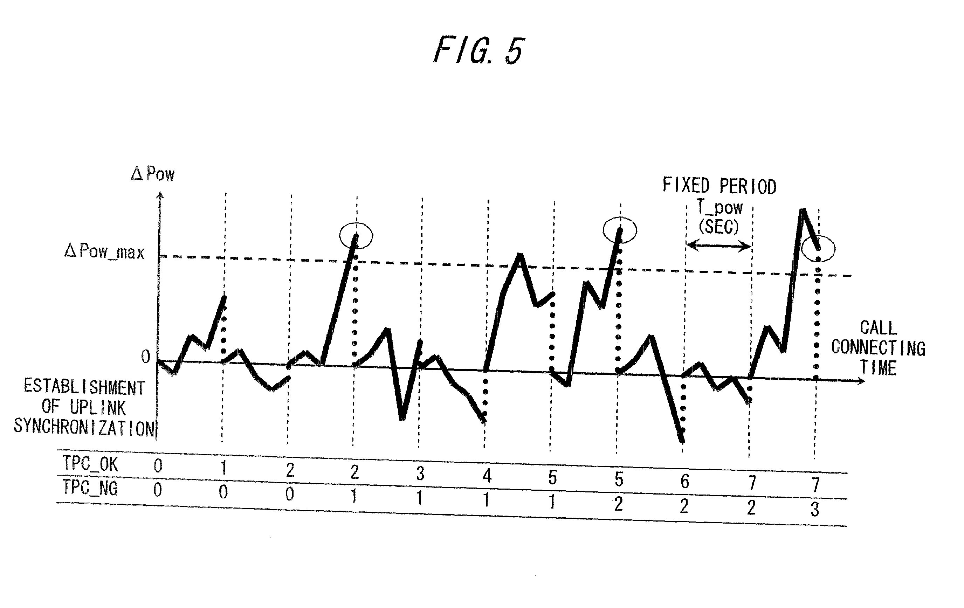

FIG. 5 is a graph showing an example of updating the TPC_OK value and the TPC_NG value in the inner loop monitoring unit 51. In the graph in FIG. 5, the axis of ordinate represents the power increment/decrement value (ΔPow), and the axis of abscissa represents call connection time. Further, an interval defined by vertical broken lines in the direction of the axis of abscissa represents the fixed time (T pow) (sec). FIG. 5 shows that after establishing the synchronization with respect to the uplink signal from the UE 5 (after setting the call), the updating of the TPC_OK value and the TPC_NG value is started, wherein the TPC_OK value and the TPC_NG value are updated at a timing specified by the vertical broken line, and, after the updating, the power increment/decrement value (ΔPow) is initialized.

The inner loop monitoring unit 51 monitors the TPC_OK value and the TPC_NG value, thereby further updating a CH_num value and an NG_num value in the manner that follows. This CH_num value indicates a cumulative value of the number of calls set respectively in the baseband processing units 10, and the NG_num value indicates a cumulative value of the number of calls deemed to be abnormal calls in the CH_num value. Further, the CH_num value and the NG_num value are allocated per baseband resource on a specified unit, and initial values of both of these values when starting up the node B, are set to "0".

The inner loop monitoring unit 51, if the TPC_NG value reaches TPC_NG_max before TPC_OK value reaches TPC_OK max, increments each of the NG_num value and the CH_num value by "1". While on the other hand, the inner loop monitoring unit 51, if the TPC_OK value reaches TPC_OK_max before the TPC NG value reaches TPC_NG_max, increments only the CH_num value by "1". TPC_OK_max and TPC_NG_max as threshold values are each previously retained in the memory etc and are set so as to meet a condition such as TPC_OK_max + TPC_NG_max = TPC_num. TPC_num represents a sample count for the fixed time (T_pow). It is to be noted that if the set call is disconnected and the resource is released before both of the TPC_OK value and the TPC_NG value reach the threshold values, this call is excluded from the judging target call and therefore undergoes none of execution of the calculation process. Further, when the CH num value is updated, the TPC_OK value and the TPC_NG value are initialized (0), and these values are not updated till a next call is set.

By the way, the fixed time (T_pow) defined as a reading cycle of the power increment/decrement value (ΔPow) is set to, e.g., 100 msec (ms) when the slot cycle is on the order of 660 microseconds (μs). In this example, each time the power increment/decrement value (ΔPow) is updated 150 times, it follows that TPC_OK value and the TPC_NG value are updated once. It should be noted that the fixed time (T pow) is a value adjustable depending on an installing environment etc of the base station device, and the present invention does not restricts this value.

Moreover, the cumulative call count (CH_num) and the cumulative abnormal call count (NG_num) are utilized by the baseband resource management unit 19. When the CH_num value and the NG_num value are read into the baseband resource management unit 19, the inner loop monitoring unit 51 returns the CH_num value and the NG_num value to the initial value (0).

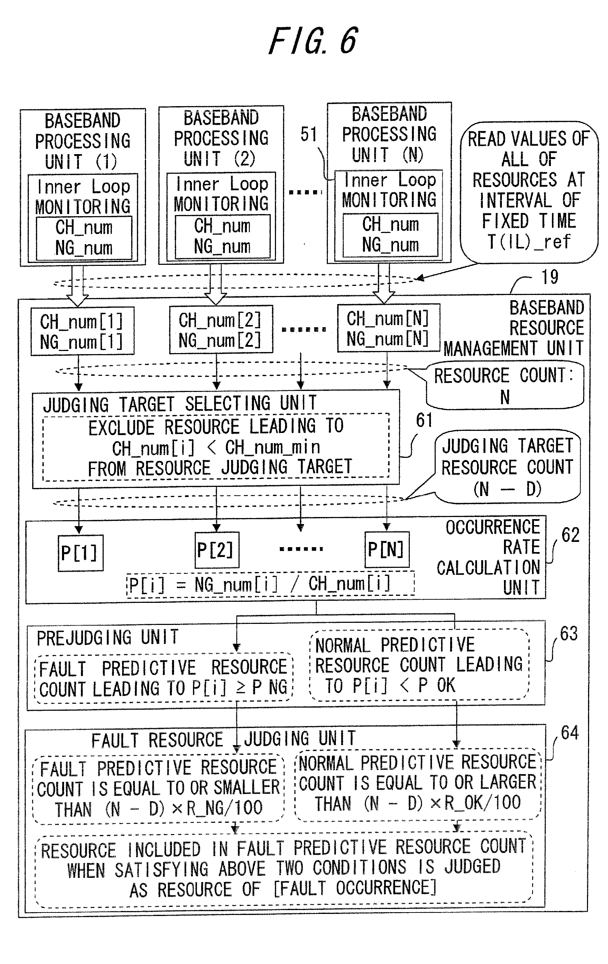

The baseband resource management unit 19 reads the CH_num value and the NG_num value from the inner loop monitoring units 51 of all of the baseband processing units 10 (baseband resource count = N) at the interval of a fixed time (T(IL)_ref), and judges the baseband processing unit where the fault occurs. The baseband resource management unit 19 will be explained with reference to FIG. 6. FIG. 6 is a diagram showing a functional configuration of the baseband resource management unit 19 in the first embodiment. The baseband resource management unit 19 includes a judging target selecting unit 61, an occurrence rate calculation unit 62, a pre-judging unit 63, a fault resource judging unit 64, etc.

The judging target selecting unit 61 selects a baseband processing unit of a fault judging target from the CH num value and the NG num value of each of the baseband processing unit (1) - (N), which are read at the interval of the fixed time (T(IL)_ref). Specifically, the judging target selecting unit 61 excludes, from the fault judging target, the baseband processing unit of which the cumulative call count (CH_num[i]) (i: serial number of the baseband processing unit) is less than a predetermined threshold value (CH_num_min). This is because if the cumulative call count is small, accuracy of the judgment about the fault declines. Such being the case, the (CH num min) is set to a value sufficient for a sample count of a call for making the judgment about the fault and is previously retained as an adjustable value in the memory etc.

The judging target selecting unit 61 transfers the CH num value and the NG_num value of each of the baseband processing units selected as the fault judging target to the occurrence rate calculation unit 62. Let D be the number of the baseband processing units excluded from the fault judging target, and the number of the baseband processing units selected as the fault judging target comes to (N - D).

The occurrence rate calculation unit 62 calculates, based on CH num values and NG_num values of the (N - d) groups sent from the judging target selecting unit 61, an abnormal call occurrence rate P[i] of each baseband processing unit selected as the fault judging target in the way that follows. The calculated abnormal call occurrence rate P[i] is sent to the pre-judging unit 63.

$$\text{Abnormal call occurrence rate } P[i] = NG\_num[i]/CH\_num[i]$$

The pre-judging unit 63 calculates, based on the abnormal call occurrence rate sent form the occurrence rate calculation unit 62, the number of the baseband processing units predicted to have a possibility of the fault (which will be hereafter referred to also as a fault prediction resource count) and the number of the baseband processing units predicted to have no possibility of the fault (which will be hereafter referred to also as a normal prediction resource count). To be specific, the pre-judging unit 63 makes a comparison between a normal prediction threshold value (P_OK), an abnormal prediction threshold value (P_NG) and each abnormal call occurrence rate, thereby calculating the fault prediction resource count and the normal prediction resource count.

Herein, the P_NG value, if $P[i] \geq$ P_NG, needs to take such a value that the baseband processing unit (i) has, it can be deemed, the possibility of the fault, while the P_OK value, if $P[i] <$ P_OK, needs to take such a value that the baseband processing unit (i) has, it can be deemed, no possibility of the fault. The normal prediction threshold value (P_OK) and the abnormal prediction threshold value (P NG) are each previously retained in an adjustable manner in the memory etc, and are set to values that satisfy a condition "$0 <$ P OK $<$ P_NG $< 1$". The calculated fault prediction resource count and normal prediction resource count are transferred to the fault resource judging unit 64.

The fault resource judging unit 64 judges, based on the fault prediction resource count and the normal prediction resource count sent from the pre-judging unit 63, the baseband processing unit where the fault occurs. The fault resource judging unit 64 previously retains, in the memory etc in the adjustable manner, a maximum rate R_NG (%) of the fault prediction resource count to the number (N - D) of the baseband processing units set as the fault judging target and a minimum rate R_OK (%) of the normal prediction resource count to the number (N - D) of the baseband processing units set as the fault judging target. Herein, these maximum and minimum rates shall be set by R_NG + R_OK = 100%. The fault, however, deems to occur individually in only a small number of specified baseband processing units, and, in principle, the R_NG value and the R_OK value are set to satisfy a condition such as R_NG $<<$ R_OK.

The fault resource judging unit 64, in the case of meeting the following two conditions using the retained values, judges that the baseband processing unit included in the fault prediction resource count at that time is the fault-occurred baseband processing unit.

$$\text{(Condition 1) Fault prediction resource count} \leq$$

$$\text{(N - D)} \times \text{R\_NG/(R\_NG + R\_OK)}$$

$$\text{(Condition 2) Normal prediction resource count} \geq$$

$$\text{(N - D)} \times \text{R\_OK/(R\_NG + R\_OK)}$$

This type of judgment about the fault in the baseband resource management unit 19 clarifies the normality of the resources other than the fault-occurred unit in order to specify not the abnormal phenomenon due to an outside factor but the abnormal phenomenon due to the fault in the specified baseband processing unit (resource).

<Radio Network Controller (RNC)>

The RNC 2 has, as a hardware configuration, a CPU (Central Processing Unit), a memory, an input/output interface, etc, and the CPU executes a program stored in the memory, thereby actualizing a function as the general radio network controller. The present invention does not restrict the function of the RNC 2.

Given in the present invention as a function related to the RNC 2 is a function of determining the SIR increment/decrement value ($\Delta$sir) under the outer loop control, and notifying the node B1 of the determined value $\Delta$sir. The RNC 2 detects a CRCI about a transport block transmitted from the node B1, and calculates the SIR increment/decrement value ($\Delta$sir) on the basis of this CRCI.

<Mobile Terminal (UE)>

The UE 5 has a wireless interface function, and transmits and receives radio waves to and from the base station device covering its location as a communication area by a communication method actualized by this wireless interface. The first embodiment does not limit the function of the UE 5.

[Operational Example]

Next, an operational example of the base station device in the first embodiment will be explained.
The UE 5 performs the wireless communications with the predetermined base station device corresponding to a UE-existing location in order to get a call service etc provided by the mobile communication system. The radio signals transmitted from the UE 5 are received by the antenna 15 of the base station device, then amplified by the OA-RA 16 and transmitted to the node B1. In the node B1 of the base station device, the received uplink signals are modulated by the wireless modulation/demodulation unit 11 and transmitted to any one of the plurality of baseband processing units 10.

In each baseband processing unit 10, the call-set signals are subjected to the signal processing such as deinterleaving and channel decoding, thereby extracting a transport block. The thus-acquired transport block is transmitted via the highway interface unit 12 to the RNC 2 defined as the higher-order processing layer.

Further, in each baseband processing unit 10, a pilot symbol is detected from the received uplink signals, and the inner loop control using this pilot symbol is each executed. The TPC bit obtained by this inner loop control is set in the downlink transmission signals subjected to channel coding and interleaving. The thus-generated downlink signals are frequency-converted in the amplifier unit 17 and transmitted via the OA-RA 16 from the antenna 15 to the UE 5.

On the other hand, the RNC 2 executes the outer loop control and updates the SIR increment/decrement value ($\Delta$sir) at a TTI (Transmission Time Interval) cycle on the basis of the CRCI per transport block transmitted from the node B1. The uplink power control unit 30 of the baseband processing unit 10 corresponding to the call is notified of this SIR increment/decrement value at the control timer (T_OL) cycle, and the SIR inorement/deorement value is utilized for the inner loop control.

In the base station device in the first embodiment, the baseband resource management unit 19 provided in the node B1 and the inner loop monitoring units 51 provided respectively in each baseband processing unit 10 in the node B1, detect the fault-occurred baseband processing unit.

The inner loop monitoring unit 51 receives the TPC bit defined as a result of the inner loop control that is outputted at the slot cycle from the uplink power control unit 30, and acquires, based on this TPC bit, the cumulative call count (CH_num) and the cumulative abnormal call count (NG_num) processed in the baseband processing unit.

The inner loop monitoring unit 51 compares the power increment/decrement value ($\Delta$Pow) updated when inputting the TPC bit with the previously-retained power increment/decrement threshold value ($\Delta$Pow_max) , thereby obtaining a judgment count (TPC_NG value) with which the power increment/decrement value is judged to be so large (judged to be larger than the power increment/decrement threshold value) at the fixed cycle (T_pow) and a judgment count (TPC_OK value) with which the power increment/decrement value is judged not to be so large.

The inner loop monitoring unit 51, if the judgment count (TPC_NG value), with which the power increment/ decrement value is judged to be so large, is judged to be larger than an abnormality threshold value (TPC_NG_max) before the judgment count (TPC_OK value), with which the power increment/decrement value is judged not to be so large, is judged to be larger than a normality threshold value (TPC_OK max), counts the call at that time as an abnormal call (NG_num value is incremented). The thus accumulated NG_num value and CH_num value are read into the baseband resource management unit 19 at the interval of the fixed time (T(IL)_ref) and thereafter initialized.

The baseband resource management unit 19 judges the fault-occurred baseband processing unit 10 on the basis of the cumulative call count (CH_num) and the cumulative abnormal call count (NG_num) cumulated in each baseband processing unit 10.

For this operation, at first, the judging target selecting unit 61 excludes the baseband processing unit of which the cumulative call count does not reach a call count (CH_num_min) considered to be the minimum required for making the judgment about the fault. Subsequently, with respect to each baseband processing unit selected as the fault judging target, the occurrence rate calculation unit 62 calculates the abnormal call occurrence rate P[i] on the basis of the cumulative call count and the cumulative abnormal call count. In the wake of this, the pre-judging unit 63 obtains a fault predictive resource count by counting, as a fault predictive resource, the baseband processing unit of which the abnormal call occurrence rate is larger than the predetermined threshold value (P_NG), and obtains a normal predictive resource count by counting, as a normal predictive resource, the baseband processing unit of which the abnormal call occurrence rate is smaller than the predetermined threshold value (P_OK).

Finally, if this fault predictive resource count is equal to or smaller than a maximum rate R NG (%) of the fault predictive resource count to the number (N - D) of the fault judging target baseband processing units and if the normal predictive resource count is equal to or larger than a minimum rate R_OK (%) of the normal predictive resource count to the number (N - D) of the fault judging target baseband processing units, each baseband processing unit judged as the fault predictive resource is judged to be the fault-occurred baseband processing unit.

<Operation and Effect In First Embodiment>

Namely, in the base station device in the first embodiment, the baseband resource management unit 19 provided in the node B1 and the inner loop monitoring units 51 provided respectively in each baseband processing unit 10 in the node B1, detect the fault-occurred baseband processing unit.

In the inner loop monitoring unit 51 of each baseband processing unit 10, with respect to the call (channel) set in each baseband processing unit 10, the TPC bit obtained by the uplink power control unit 30 is inputted at the slot cycle, and a time addition of this TPC bit value is carried out (the power increment/decrement value (ΔPow)). As a result, the inner loop monitoring unit 51 counts the cumulative call count (CH_num value) set in the baseband processing unit 10 and the cumulative abnormal call count (NG num value) of the abnormal calls causing the phenomenon that the power increment/decrement value extremely rises, respectively.

The cumulative call count (CH_num value) and the cumulative abnormal call count (NG_num value), which are obtained in each baseband processing unit 10, are each read into the baseband resource management unit 19, and the baseband resource management unit 19 judges the fault-occurred baseband processing unit 10. In this judgment, the cumulative call count reaching the call count required for making the precise judgment about the fault is selected, and the abnormal call occurrence rate calculated with respect to each baseband processing unit is employed.

Thus, in the base station device in the first embodiment, the fault-occurred baseband processing unit is specified by using the TPC bit defined as the output of the inner loop control in each baseband processing unit provided in the node B1

With this scheme, it is possible to detect the faults occurred in the channel estimation unit 23, the RAKE synthesizing unit 22 and the peripheral interfaces thereto after establishing the synchronization of the uplink signals.

If such a fault occurs, the uplink power control unit 30 estimates that a power value of an uplink desired wave is extremely low, then there continues a state in which a high SIR measured value is not detected with the result that the SIR measured value is always lower than the SIR target value of the set call, and hence such a phenomenon is detected that the TPC bit mapped to the downlink physical channel continues to be set to a value that increases the transmission power.

According to the first embodiment, the inner loop monitoring unit 51 and the baseband resource management unit 19 can detect the in-depth fault of the signal processing unit.

Further, on the occasion of detecting the fault of the signal processing unit, there is neither the necessity of stopping the operation of the signal processing unit nor the decrease in operating rate.

[Second Embodiment]

The mobile communication system according to a second embodiment of the present invention will hereinafter be described. In the mobile communication system according to the first embodiment explained earlier, the base station device judges, the fault-occurred baseband processing unit by use of the TPC bit defined as the output as the result of the inner loop control. The base station device of the mobile communication system in the second embodiment judges the fault-occurred baseband processing unit by use of the SIR increment/decrement value (△sir) defined as an output as a result of outer loop control.

[System Architecture]

The system architecture is the same as in the first embodiment illustrated in FIG. 1. A configuration of the second embodiment, which will hereinafter be discussed, is an exemplification, and the present invention is not limited to the following configuration.

Further, the UE 5 and the RNC 2, which configure the mobile communication system in the second embodiment, are the same as in the first embodiment, and hence their descriptions are omitted. The base station device of the mobile communication system in the second embodiment will hereinafter be described.

<Base Station Device>

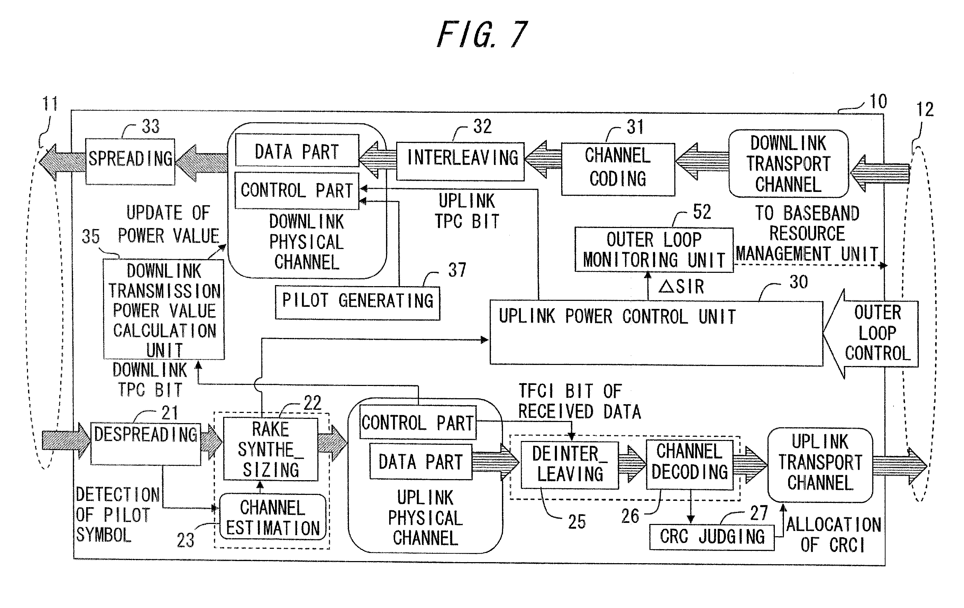

The base station device in the second embodiment is different from the first embodiment in terms of only the function of the baseband processing unit 10 in the node B1, and therefore the following discussion will deal with the function of the baseband processing unit 10 with reference to FIG. 7. FIG. 7 is a block diagram showing the functional configuration of the baseband processing unit 10 in the second embodiment.

«Node B»

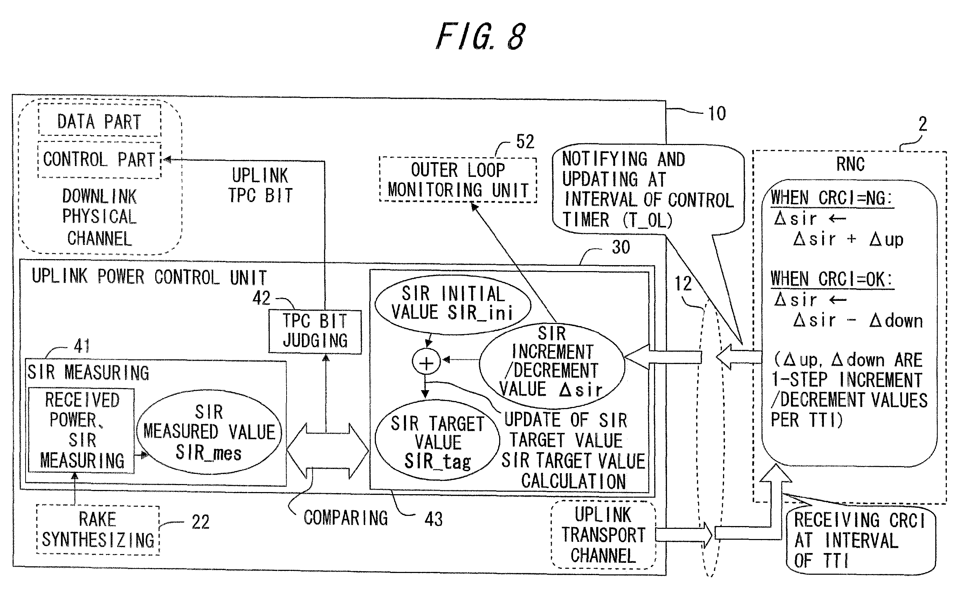

Provided are the baseband processing units 10 of which the number (N-pieces of units) corresponding to a call setting capacity of the node B1. The baseband processing unit 10 in the second embodiment includes an outer loop monitoring unit 52 that replaces the inner loop monitoring unit 51 in the first embodiment. The function units other than the outer loop monitoring unit 52 are the same as those in the first embodiment, and hence their explanations are herein omitted. It is to be noted that the uplink power control unit 30 is the function unit related to this outer loop monitoring unit 52 and is therefore explained with reference to FIG. 8. FIG. 8 is a block diagram showing the functional configuration of the uplink power control unit 30 in the second embodiment.

The uplink power control unit 30, when receiving the SIR increment/decrement value ($\Delta$sir) at the control timer (T_OL) cycle from the RNC 2, transmits the SIR increment/decrement value ($\Delta$sir), while retaining this value, separately to the outer loop monitoring unit 52. The initial value, at the call setting time, of this SIR increment/decrement value ($\Delta$sir) is set to "0" and is updated any time on such an occasion that the outer loop control is conducted for the call. This point is the same as in the first embodiment. Other functions within the uplink power control unit 30 are the as in the first embodiment, and therefore the explanations thereof omitted herein.

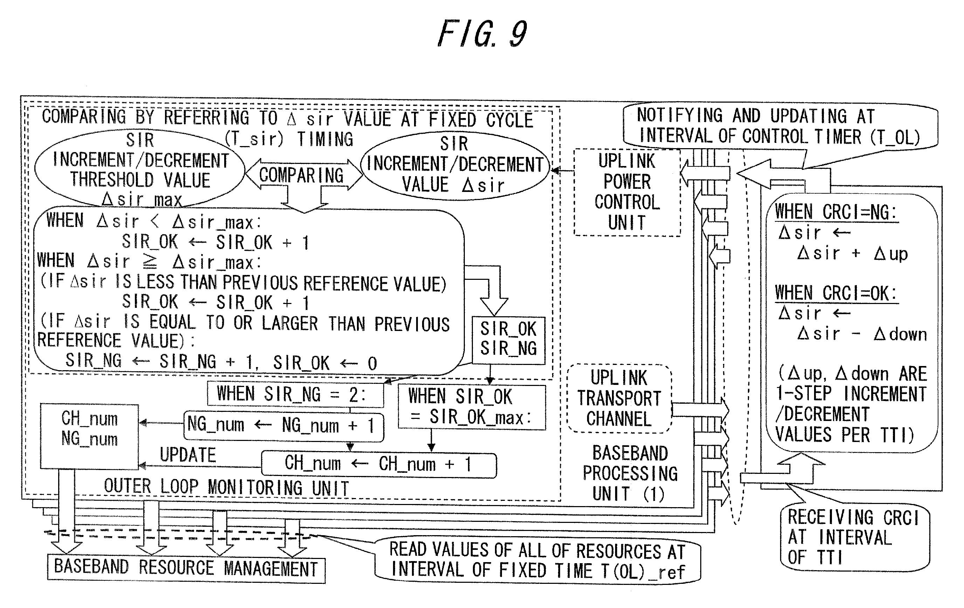

The outer loop monitoring unit 52 will hereinafter be described with reference to FIG. 9. FIG. 9 is a diagram showing a processing concept of the outer loop monitoring unit 52. The outer loop monitoring unit 52 is provided in each of the baseband processing units 10 and executes detecting the fault in the predetermined function unit in the following manner. The function units, of which the faults are detected by the outer loop monitoring unit 52, are exemplified such as the deinterleaving unit 25 and the channel decoding unit 26 as the processing units posterior to the process of the uplink physical channel bit judgment.

The outer loop monitoring unit 52 reads the SIR increment/decrement value ($\Delta$sir) at that point of time at an interval of a fixed time (T_sir), and compares this SIR increment/decrement value ($\Delta$sir) with the SIR increment/decrement threshold value ($\Delta$sir_max) previously retained in the memory etc. This fixed time (T_sir) takes a value adjustable corresponding to the installing environment etc of the base station device and is previously retained in the memory etc. A period of time (T_sir $\geq$ T_OL) longer than the cycle (T_OL) at which the RNC 2 notifies of the SIR increment/decrement value ($\Delta$sir), is set in this fixed time (T sir).

The outer loop monitoring unit 52 updates, corresponding to a result of this comparison, the SIR_OK value or the SIR_NG value. The SIR OK value represents the number of times when judged to be normal in the comparison at the T sir interval, and the SIR_NG value represents the number of times when judged to be abnormal in the comparison at the T sir interval. The SIR_OK value and the SIR_NG value are set to "0" as the initial values when establishing the uplink synchronization after setting the call, wherein the SIR_OK value is initialized (0) when judged to be abnormal at a certain timing.

As to the judgment about the normality or the abnormality, if the SIR increment/decrement value ($\Delta$sir) is smaller than the SIR increment/decrement threshold value ($\Delta$sir max), it is judged normal. Further, if the SIR increment/decrement value ($\Delta$sir) is equal to or larger than the SIR increment/decrement threshold value ($\Delta$sir_max) and if less than the SIR increment/decrement value ($\Delta$sir) referred to at the timing of the last time (T_sir time ago), it is also judged normal. While on the other hand, if the SIR increment/decrement value ($\Delta$sir) is equal to or larger than the SIR increment/decrement threshold value ($\Delta$sir_max) and if equal to or larger than the SIR increment/decrement value ($\Delta$sir) referred to at the timing of the last time (T_sir time ago), it is judged abnormal.

Herein, the SIR increment/decrement threshold value ($\Delta$sir_max) is a value designated according to every call type and is set to a value that satisfies $\Delta$sir_max > 0. Further, an upper limit value and a lower limit value are defined the SIR increment/decrement value ($\Delta$sir) set by the outer loop control, and therefore the value of $\Delta$sir_max is set in a range that does not exceeds the upper limit value in which the SIR increment/decrement value ($\Delta$sir) is defined.

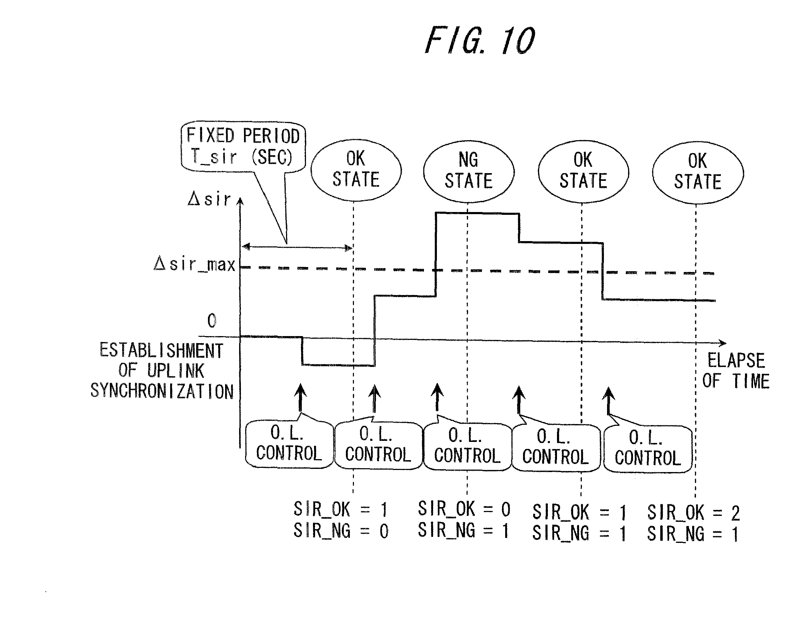

FIGS. 10, 11 and 12 are graphs showing three examples about updating of the SIR_OK value and the SIR_ NG value in the outer loop monitoring unit 52. The axis of ordinate in each of the graphs in FIGS. 10, 11 and 12 represents the SIR increment/decrement value ($\Delta$sir), and the axis of abscissa represents the call connection time. Moreover, an interval defined by the vertical broken lines in the direction of the axis of abscissa indicates the fixed time (T_sir) (sec). FIGS. 10, 11 and 12 show that the updating of the SIR_OK value and the SIR_NG value is started after establishing the synchronization in regard to the uplink signals from the UE 5 (after setting the call), and the SIR_OK value and the SIR_ NG value are updated at the timing specified by the vertical broken line. Further, a point indicated by an upward-directed arrow, i.e., the point indicated by the SIR increment/decrement value ($\Delta$sir) shows the timing when the outer loop control is conducted.

The outer loop monitoring unit 52 monitors the SIR_OK value and the SIR_NG value, thereby further updating the CH_num value and the NG_num value in the following way. This CH_num value represents a cumulative value of the call count set in each of the baseband processing units 10, and the NG_num value represents a cumulative value of the call count of the calls deemed as the abnormal calls in the CH_num value. Moreover, the CH_num, value and the NG_num value are allocated per baseband resource on the specified unit, and the initial values of both of these values at the device start-up time of the node B are set to "0".

The outer loop monitoring unit 52, if the SIR_NG value reaches SIR_NG_max before the SIR OK value reaches SIR OK_max, increments the NG_num value and the CH_num value by 1, respectively. On the other hand, the outer loop monitoring unit 52, if the SIR_OK value reaches SIR_OK_max before the SIR NG value reaches SIR_NG_max, increments only the CH_num value by 1.

SIR_OK_max and SIR_NG_max defined as the threshold values are previously retained in the adjustable manner in the memory etc. The value of SIR_OK_max represents the time required as normal operation time for judging that the set call is normal. Namely, if there continues the state in which it is judged normal the number of times specified by SIR_OK_max, the set call is judged to be the normal call. On the other hand, the value of SIR NG max shall be set to [2] as the best value in the second embodiment. This is based on such recognition that the T_sir time and the control timer (T OL) cycle time are each well longer than the updating cycle of the TPC bit of the uplink signal under the inner loop control. It should be noted that the present invention does not restrict the value of SIR NG max to [2], and this value is adjustable corresponding to the time set in T_sir and the time set in the control timer (T_OL).

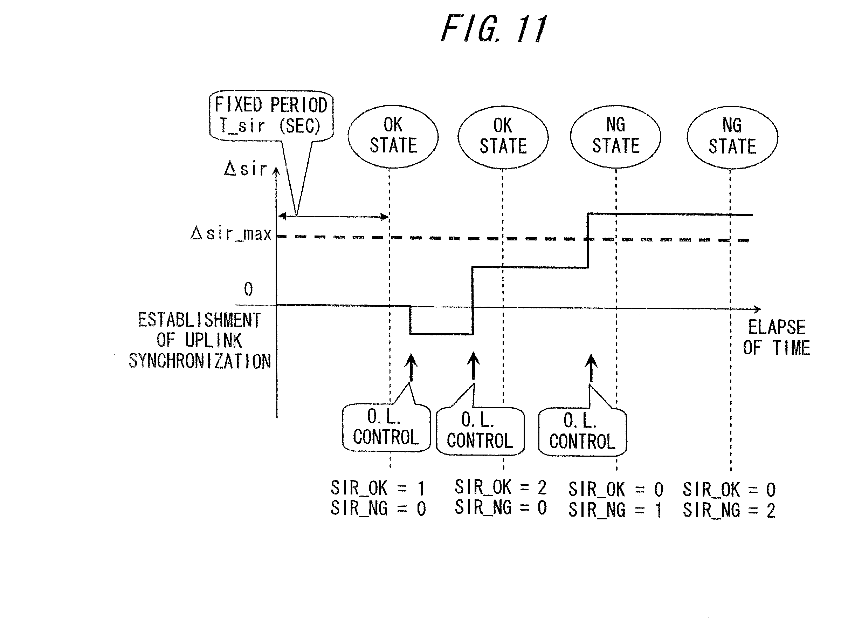

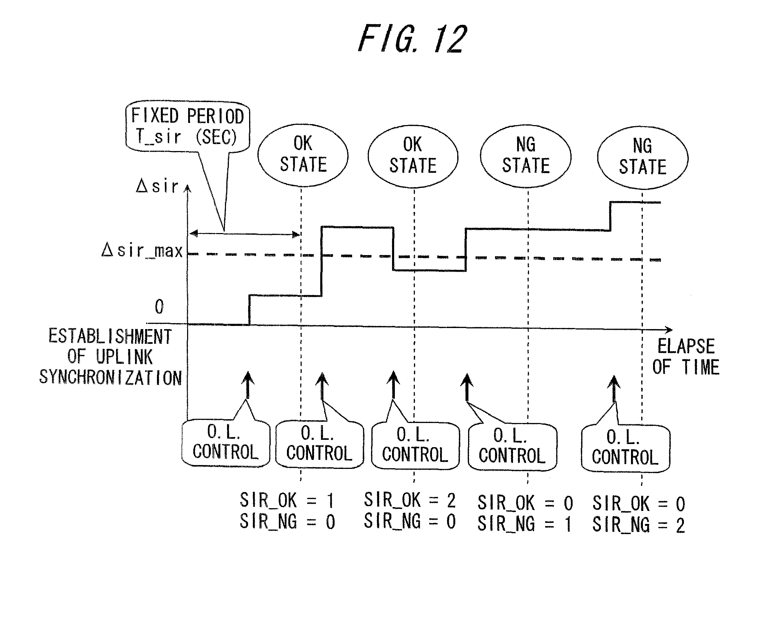

In the second embodiment, if the state in which it is judged abnormal occurs twice before the continuation of the state in which it is judged normal the number of times specified by SIR_OK_max, the set call at that point of time is judged as the abnormal call (the call is judged abnormal if the NG (abnormal) state gets consecutive twice in the examples in FIGS. 11 and 12). Note that if the set call is disconnected before both of the SIR_OK value and the SIR_NG value reach the threshold values and then the resource is released, this call is excluded from the judging target and undergoes no execution of the calculation process. Further, when the CH_num value is updated, SIR_OK value and the SIR_NG value are initialized (0), and these values are not updated till a next call is set.

The cumulative call count (CH_num) and the cumulative abnormal call count (NG_num), which are updated by the processing of the outer loop monitoring unit 52, are utilized in the baseband resource management unit 19. When the CH_num value and the NG_num value are read into the baseband resource management unit 19, the outer loop monitoring unit 52 returns the CH_num value and the NG_num value to the initial value (0).

The baseband resource management unit 19 is the same as in the first embodiment except a point that the outer loop monitoring unit 52 is the unit from which the CH_num value and the NG_num value are obtained and a point that the reading interval of these values is a fixed time (T(OL) ref).

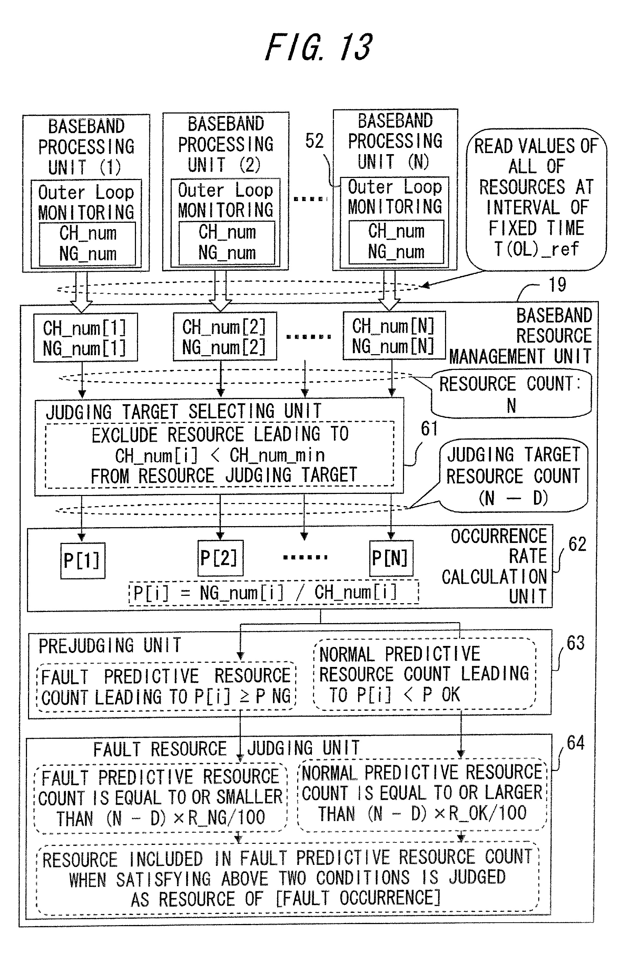

Namely, the baseband resource management unit 19 reads the CH_num values and the NG_num values from the outer loop monitoring unit 52 of all of the baseband processing units 10 (baseband resource count = N) at the interval of the fixed time (T(OL)_ref), and judges the fault-occurred baseband processing unit. FIG. 13 shows a functional configuration of the baseband resource management unit 19 in the second embodiment.

Herein, the reason why the value of SIR_NG_max is set to [2] in the second embodiment as described above will be elucidated. At first, the following two cases are considered as cases in which the SIR_NG value reaches [2].

(Case 1) This is a case of its being judged abnormal at a comparative timing (2 x T_sir) when the SIR increment/ decrement value (Δsir) gets consecutive twice from the state where the SIR_NG value is [0].

(Case 2) This is a case where the normal state of the SIR increment/decrement value (Δsir) continues since the SIR increment/decrement value (Δsir) was judged abnormal for the first time (the SIR_NG value is [1]), and, before the SIR value reaches SIR_OK_max, the SIR increment/decrement value (Δsir) is judged again abnormal.

In the (Case 1), if the SIR increment/decrement value (Δsir) exceeds the SIR increment/decrement threshold value (Asir_max) under the outer loop control, an uplink reception quality becomes excessive, and therefore, after the next fixed cycle (T sir), the SIR increment/decrement value (Δsir) must have got lower than before by the outer loop control conducted again. Accordingly, if judged abnormal at the comparative timing when the SIR increment/decrement value (Δsir) gets consecutive twice and even when the SIR increment/decrement value (Δsir) extremely rises (even when exceeding the threshold value), it can be judged that the quality is not yet improved.

The (Case 2) corresponds to a phenomenon when the fault occurs in the decoding processing unit (such as the deinterleaving unit 25 and the channel decoding unit 26). Two types of phenomena, one of which is that the quality deterioration occurs consecutively and the other of which is that the quality deterioration occurs singly at a specified cycle, are considered as the phenomena appearing when the fault occurs in the decoding processing unit. The former phenomenon is the same as the (Case 1), however, the latter phenomenon can not be considered the same as the (Case 1).

To cope with the latter phenomenon, the threshold value SIR_OK_max is defined. When the SIR_OK value does not reach SIR_OK_max and if the abnormal state of the SIR increment/decrement value (Δsir) is not detected even once, it can be judged that the abnormal state does not occur at the specified cycle, i.e., that no fault occurs in the decoding processing unit.

Namely, in the second embodiment, though the SIR increment/decrement value (△sir) becomes the abnormal state once (though the SIR_NG value becomes "1"), thereafter, if the SIR increment/decrement value (△sir) is kept in the normal state within [T_sir x SIR_OK_max] time, the quality deterioration is temporary, and this is not, it is judged, attributed to the fault in the decoding processing unit.

On the other hand, though the SIR increment/deorement value (△sir) becomes the abnormal state once, thereafter, if the SIR increment/decrement value (△sir) is judged again abnormal within the [T_sir x SIR OK max] time, the quality deterioration occurs cyclically (which corresponds to the Case 2), and it is judged that there is a possibility of being attributed to the fault in the decoding processing unit.

[Operational Example]

Next, an operational example of the base station device in the second embodiment will be explained.
The base station device in the second embodiment judges the fault-occurred baseband processing unit by use of the SIR increment/decrement value ($\triangle$sir) defined as the output as the result of the outer loop control. Namely, in the base station device in the second embodiment, the baseband resource management unit 19 included in the node B1 and the outer loop monitoring units 52 provided in each baseband processing unit 10 of the node B1, detect the fault-occurred baseband processing unit.

The outer loop monitoring unit 52 refers to the SIR increment/decrement value ($\triangle$sir), at the fixed cycle (T sir), outputted from the uplink power control unit 30, and obtains the cumulative call count (CH_num) and the cumulative abnormal call count (NG_num) processed in the baseband processing unit on the basis of the SIR increment/decrement value ($\triangle$sir).

The outer loop monitoring unit 52 compares the SIR increment/decrement value ($\triangle$sir) with the previously-retained SIR increment/decrement threshold value ($\triangle$sir_max), thereby obtaining a judgment count (SIR_NG value) with which the SIR increment/decrement value is judged, at the fixed cycle (T_sir), to be so large (larger than the SIR increment/decrement threshold value) and judged much larger than the SIR increment/decrement value when referred to last time and also a judgment count (SIR_OK value) with which the SIR increment/decrement value is judged not to be so large.

The outer loop monitoring unit 52, if a judgment count (TPC_NG value) with which the SIR increment/decrement value is judged so consecutively large and greater than the abnormality threshold value (SIR_NG_max ([2] is adopted in the second embodiment)) before this SIR_OK value is judged larger than the normal threshold value (SIR_OK_max), counts the call at that time as an abnormal call (the NG_num value is incremented). The thus cumulated NG num value and the CH num value are read into the baseband resource management unit 19 at the interval of the fixed time (T(OL) _ref) and thereafter initialized.

The baseband resource management unit 19 judges the fault-occurred baseband processing unit 10 by the method as in the first embodiment on the basis of the cumulative call count (CH_num) and the cumulative abnormal call count (NG num) which respectively cumulated in each baseband processing unit 10.

<Operation and Effect in Second Embodiment>

Namely, in the base station device in the second embodiment, the baseband resource management unit 19 included in the node B1 and the outer loop monitoring units 52 provided in each baseband processing unit 10 of the node B1, detect the fault-occurred baseband processing unit.

The outer loop monitoring unit 52 of each baseband processing unit 10, with respect to the call (channel) set in each baseband processing unit 10, monitors the state where the SIR increment/decrement value ($\triangle$sir) outputted under the outer loop control of the RNC 2 extremely consecutively rises and also the normal state other than this state (the SIR_NG value and the SIR_OK value). Counted further are the cumulative call count (CH_num value) of the calls set in the baseband processing units 10 and the cumulative abnormal call count (NG_num value) of the abnormal calls causing the state in which this SIR increment/decrement value extremely consecutively rises.

The cumulative call count (CH_num value) and the cumulative abnormal call count (NG_num value), which are obtained in these respective baseband processing units 10, are read into the baseband resource management unit 19, and the baseband resource management unit 19 judges the fault-occurred baseband processing unit 10.

Thus, in the base station device in the second embodiment, the fault-occurred baseband processing unit is specified by use of the SIR value defined as the output of the outer loop control to each baseband processing unit provided in the node B1.

With this operation, it is possible to detect the faults occurred in the decoding processing units (the deinterleaving unit 25 and the channel decoding unit 26) and in the peripheral interface thereto after judging the bit of the received uplink physical channel.

If such a fault occurs, "NG" frequently comes out in the CRC judgment of each transport block. The SIR increment/decrement value is incremented and decremented corresponding to the result (OK or NG) of the CRC judgment, and it is therefore feasible to detect the fault by monitoring the SIR increment/decrement value.

Note that a method of measuring BLER (Block Error Rate) with respect to all of the calls set in the nodes B and comparing these rates with each other is considered another method, however, this method is carried out during the actual operation of the node B, and it is not therefore preferable to apply a tremendous processing load caused by the BLER measurement of all of the channels.

According to the second embodiment, the outer loop monitoring unit 52 and the baseband resource management unit 19 can detect such an in-depth fault in the signal processing unit. Furthermore, on the occasion of detecting such a fault in the signal processing unit, there is no necessity of stopping the signal processing unit, and hence the operating rate does not decrease.

[Third Embodiment]

The first embodiment and the second embodiment have given the description of the mode of each of the base station devices of the mobile communication system. The mobile terminal (UE) performing the wireless communications with a base station device embracing the base station devices in the first embodiment and the second embodiment, will hereinafter be explained by way of a third embodiment.

[System Architecture]

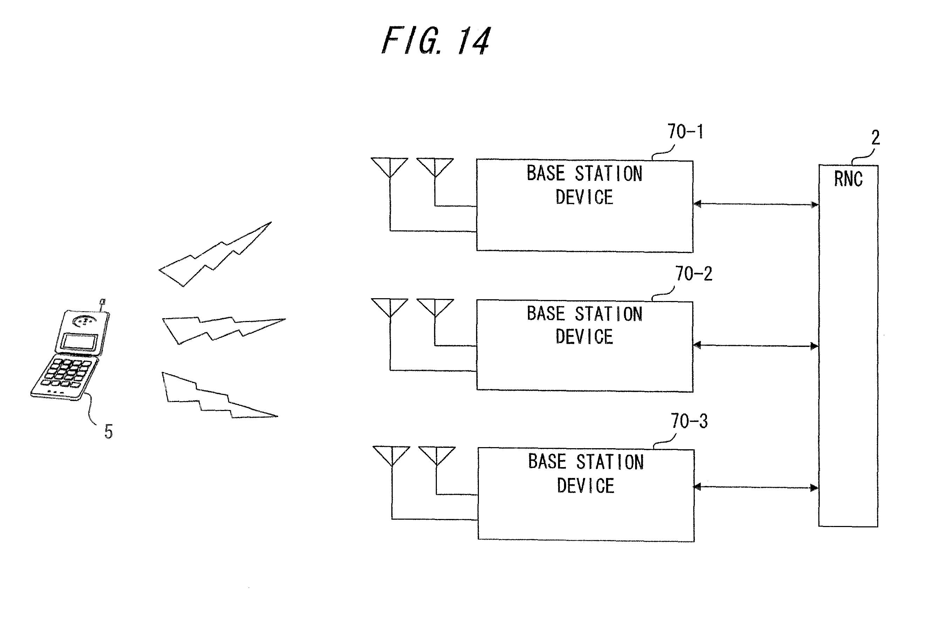

A system architecture, since a third embodiment provides a scheme that the UE judges a fault in the self-device while performing the wireless communications with the plurality of base station devices, will be described on the assumption of the system architecture illustrated in FIG. 14. FIG. 14 is a diagram showing an example of the system architecture of the mobile communication system in the third embodiment. The UE 5 performs the wireless communications with at least one of base station devices 70-1, 70-2 and 70-3. The base station devices 70-1, 70-2 and 70-3 may each be the base station device in the first embodiment or the second embodiment, and may also be a general type of base station device other than those. The UE 5 in the third embodiment does not restrict the function of the station device.

[Configuration of Device]

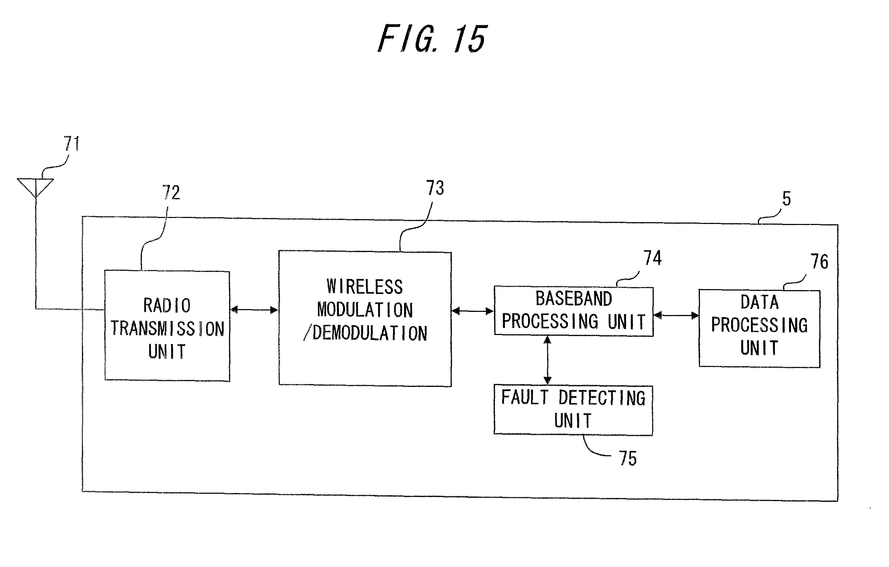

An outline of a functional configuration of the mobile terminal in the third embodiment will be explained with reference to FIG. 15. FIG. 15 is a diagram showing the example of the functional configuration of the mobile terminal in the third embodiment. The UE 5 includes an antenna 71, a radio transmission unit 72, a wireless modulation/demodulation unit 73, a baseband processing unit 74, a fault detecting unit 75, a data processing unit 76 and so on. An outline of the function of each of the function units configuring the UE 5 will be explained.

An antenna 71 receives the downlink radio signals transmitted from at least one of the base station devices 70-1, 70-2 and 70-3. The radio signals (downlink signals) received by the antenna 71 are subjected to frequency-conversion, signal-amplification, etc in the radio transmission unit 72 and then transmitted to the wireless modulation/demodulation unit 73. The wireless modulation/demodulation unit 73 demodulates the signals transmitted from the radio transmission unit 72 and transmits the demodulated signals to the baseband processing unit 74. A transport block outputted from the baseband processing unit 74 is sent to the data processing unit 76.

The data processing unit 76 receives the transport block, and executes data processing of user data etc contained in this transport block. On the other hand, the data processing unit 76 generates data that should be transmitted to the base station devices. The data processing unit 76 organizes the transmission data into the transport block and sends the transport block to the baseband processing unit 74.

The baseband processing unit 74 generates the uplink signals in a way that maps this transport block to the physical channel, and transmits the uplink signals to the wireless modulation/demodulation unit 73. The wireless modulation/demodulation unit 73 modulates the uplink signals by a predetermined method, and transmits the modulates signals to the radio transmission unit 72. The radio transmission unit 72 frequency-converts the modulated uplink signals. The thus-generated uplink signals are transmitted form the antenna 71.

It should be noted that the baseband processing unit 74 and the fault detecting unit 75 among those function units are characteristic of the present invention. The baseband processing unit 74 and the fault detecting unit 75 will hereinafter be described, respectively.

<Baseband Processing Unit>

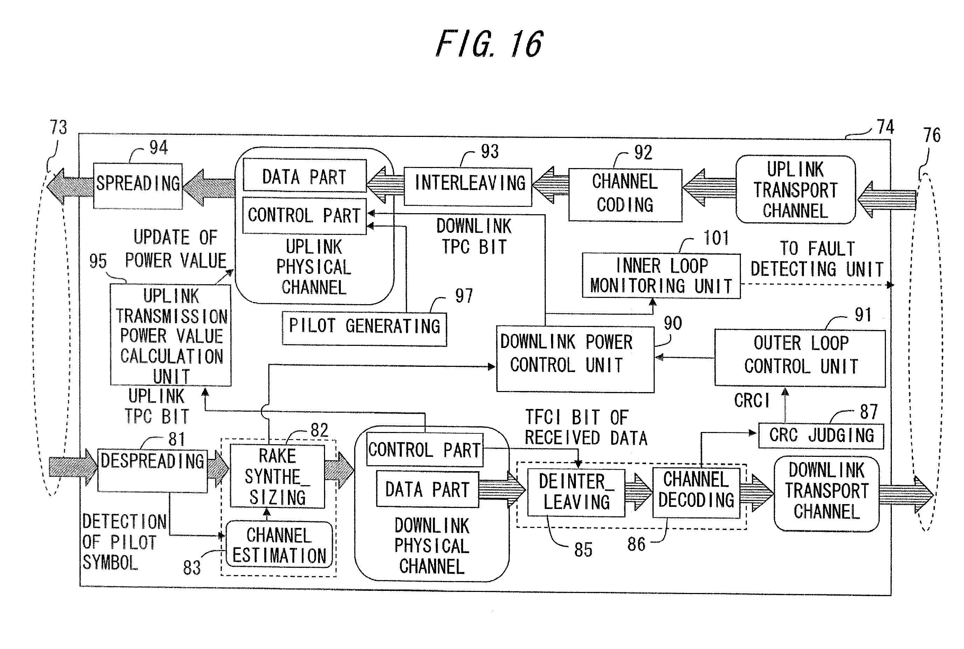

FIG. 16 is a block diagram showing a functional configuration of the baseband processing unit of the mobile terminal (UE) in the third embodiment. The baseband processing unit 74 includes a despreading unit 81, a RAKE synthesizing unit 82, a channel estimation unit 83, a deinterleaving unit 85, a channel decoding unit 86, a CRC judging unit 87, a downlink power control unit 90, an outer loop control unit 91, a channel coding unit 92, an interleaving unit 93, a spreading unit 94, an uplink transmission power value calculation unit 95, a pilot generation unit 97, an inner loop monitoring unit 101, etc.

The downlink demodulated signals transmitted from the wireless modulation/demodulation unit 73 are despread by a spreading code allocated to the self-device (UE 5) in the despreading unit 81, and are sent to a RAKE synthesizing unit 82. Further, a pilot symbol is detected from the signals acquired by their being despread, and a channel estimation unit 83 conducts channel-estimation based on the detected pilot symbol. Then, the RAKE synthesizing unit 82 performs phase correction, amplitude correction, etc about the respective signals propagated via multi-paths with the channel estimated value, thereby RAKE-synthesizing the signals. The TPC bit contained in a control signal of the downlink physical channel that is outputted from the RAKE synthesizing unit 82, is transmitted to the uplink transmission power value calculation unit 95, and a TFCI contained in the same control signal is transmitted to the deinterleaving unit 85. Further, the detected pilot symbol is sent to the downlink power control unit 90.

The data signals of the downlink physical channel, which are outputted from the RAKE synthesizing unit 82, are deinterleaved by the deinterleaving unit 85 in a way that uses the TFCI, and the deinterleaved data signals are blocked into the respective transport blocks accepted for the transmission to the higher-order processing layer. The transport blocks respectively decoded by the channel decoding unit 86. The CRC judging unit 87 judges a cyclic redundancy check (CRC) bit contained in each of the thus-decoded transport blocks. Finally, the decoded transport block is transmitted to a data processing unit 76, and a CRC judgment result (CRCI) is sent to the outer loop control unit 91.

On the other hand, when the transport block as an aggregation of the uplink transmission signals is transmitted from the data processing unit 76, each transport block is coded by the channel coding unit 92 and interleaved in a predetermined format by the interleaving unit 93, resulting in the signals to be transmitted via the uplink physical channel. These signals are spread by a spreading unit 94 with a spreading code allocated to the UE 5 and then transmitted to the wireless modulation/demodulation unit 73.

At this time, the uplink transmission signals undergo setting of the TPC bit value transmitted from the downlink power control unit 90 and setting of the pilot signal transmitted from the pilot generation unit 97, and are given transmission power corresponding to a transmission power value sent from the uplink transmission power value calculation unit 95.

Thus, also in the baseband processing unit 74 of the UE 5, in the same way as in the node B1 the inner loop control and the outer loop control are conducted.

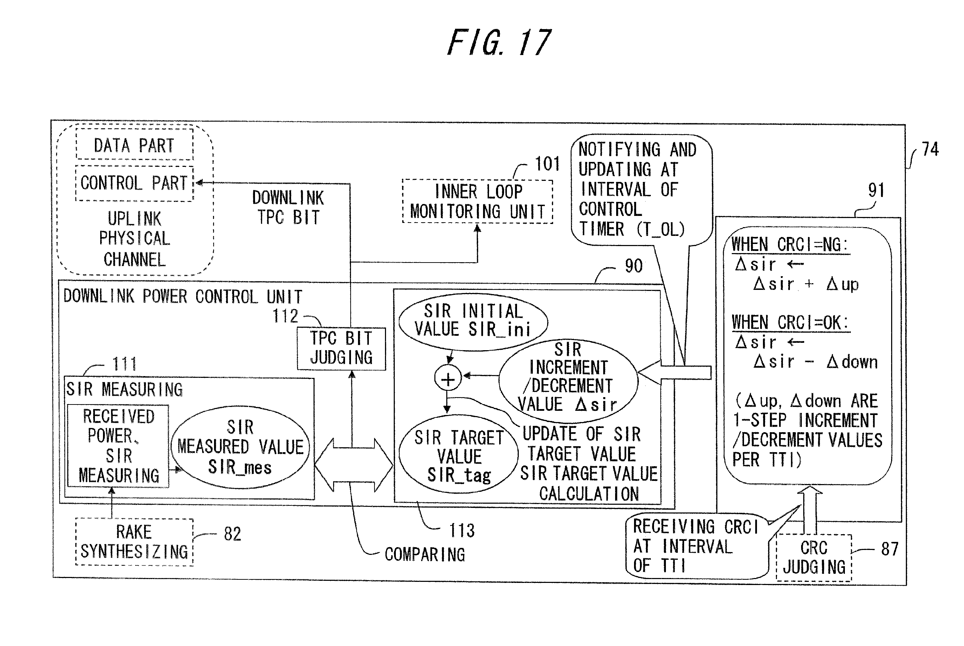

Before explaining the inner loop monitoring unit 101 particularly having a feature in the third embodiment, to start with, the downlink power control unit 90 and the outer loop control unit 91 related to this inner loop monitoring unit 101 will be described with reference to FIG. 17. FIG. 17 is a block diagram showing functional configurations of the downlink power control unit 90 and of the outer loop control unit 91 of the UE 5.

«Downlink Power Control Unit and Outer Loop Control Unit»

The outer loop control unit 91 executes the same control as the outer loop control executed by the RNC 2 that has been explained in the first embodiment. Namely, the outer loop control unit 91, when receiving the CRCI sent from the CRC judging unit 87 at the TTI cycle, updates the SIR increment/decrement value ($\Delta$sir). The SIR increment/decrement value ($\Delta$sir) is incremented by a predetermined value of increment ($\Delta$up) if the CRCI indicates an error but is decremented by a predetermined value of decrement ($\Delta$down) if the CRCI indicates normality. The outer loop control unit 91 notifies the downlink power control unit 90 of the thus-obtained SIR increment/decrement values at the predetermined control timer (T_OL) cycle.

The downlink power control unit 90, through the same process as by the uplink power control unit 30 explained in the first embodiment, acquires the TPC bit value for controlling the transmission power of the downlink signal. An SIR measuring unit 111 measures the reception power of the pilot symbol sent from the RAKE synthesizing unit 82, and calculates the SIR value. An SIR target value calculation unit 113 receives the SIR increment/decrement value ($\Delta$sir) from the outer loop control unit 91 at the control timer (T OL) cycle, and calculates a new SIR target value (SIR_tag) by adding this SIR increment/decrement value ($\Delta$sir) to an SIR initial value (SIR_ini) retained beforehand in the memory etc.

A TPC bit judging unit 112 acquires the TPC bit value (0) showing that the downlink transmission power be decreased if the SIR measured value calculated by the SIR measuring unit 111 is larger than the SIR target value, and acquires the TPC bit value (1) showing that the downlink transmission power be increased if the SIR measured value is smaller than the SIR target value. The thus-acquired TPC bit values are, in addition to being set in the uplink transmission signals, sent to the inner loop monitoring unit 101.

«Inner Loop Monitoring Unit»

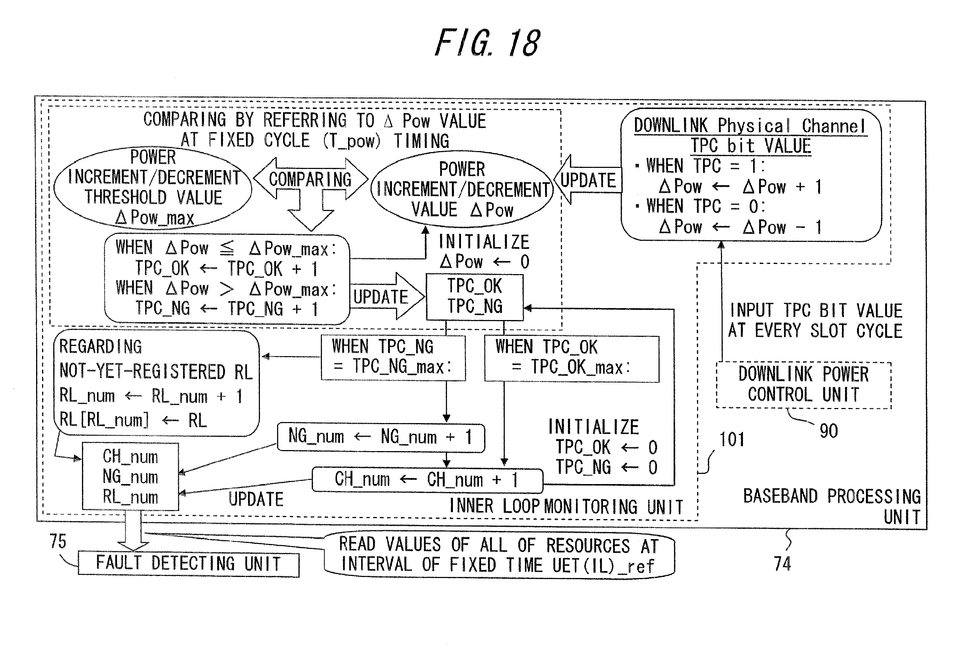

The inner loop monitoring unit 101 will hereinafter be described with reference to FIG. 18. FIG. 18 is a diagram showing a processing concept of the inner loop monitoring unit 101. The inner loop monitoring unit 101 executes detecting the faults in the predetermined function units in the way that follows. The function units, of which the faults are to be detected by the inner loop monitoring unit 101, are exemplified such as the channel estimation unit 83 and the RAKE synthesizing unit 82 that are the processing units posterior to the despreading unit 81.

The inner loop monitoring unit 101 receives the TPC bit value, at the slot cycle, outputted from the downlink power control unit 90 described above, and updates the power increment/decrement value ($\Delta$Pow) on the basis of this TPC bit value. Further, the inner loop monitoring unit 101 updates the TPC_OK value and the TPC_NG value at the fixed cycle (T pow), and further updates the CH_num value and the NG_num value. Such processes of the inner loop monitoring unit 101 are the same as of the inner loop monitoring unit 51 in the first embodiment except a difference of whether the TPC bit value to be dealt with serves for the transmission power control of the uplink signal or for the transmission power control of the downlink signal, and hence the details thereof are omitted.

The inner loop monitoring unit 101 of the UE 5, in addition to the CH_num value and the NG_num value updated in the process by the inner loop monitoring unit 51 of the node B1 in the first embodiment, counts an abnormal radio link count (RL_num) in the following manner. Herein, the RL_num value, of which the initial value is "0", represents a cumulative count of the radio links in which the abnormality, it is deemed, occurs.

The inner loop monitoring unit 101 retains a radio link number about the set call deemed to be the abnormal call. The inner loop monitoring unit 101, if deemed to be the abnormal call, checks whether or not the radio link number of the set call has already been retained (registered), and, if not yet registered, increments the abnormal radio link count (RL num) by "1", and registers the radio link number (rl) in an array RL [RL_num]. For instance, let "rl" be the radio link number of the set call if the TPC_NG value reaches TPC_NG max before the TPC_OK value reaches TPC_OK_max, and, if "rl" is not retained in the array RL [k] (k = 0 through RL_num), the processing is carried out as below.

$$\mathtt{RL\_num\ <==\ RL\_num\ +\ 1}$$

$$\mathtt{RL\ [RL\_num]\ <==\ rl}$$

The radio link number specifies the information that specifies the base station device to which the UE 5 is connected and also the wireless area or the like, and involves utilizing, e.g., a Primary Scrambling CODE set in the downlink signal. Note that the CH_num value and the NG_num value are also updated in the same way as by the inner loop monitoring unit 51 of the node B1 in the first embodiment. The thus-updated CH_num value, NG_num value and RL_num value are employed by the fault detecting unit 75.

<Fault Detecting Unit>

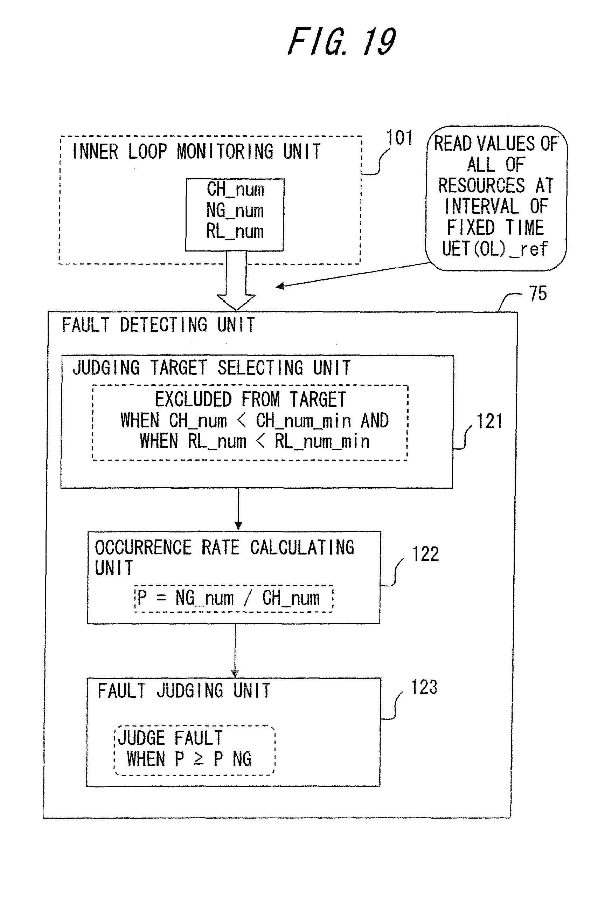

The fault detecting unit 75 reads the CH_num value, the NG_num value and the RL_num value at the interval of a fixed timer (UET(IL) ref) from the inner loop monitoring unit 101 described above, and judges the fault in the self-device. The fault detecting unit 75 will hereinafter be described with reference to FIG. 19. FIG. 19 is a diagram showing a functional configuration of the fault detecting unit in the third embodiment. The fault detecting unit 75 includes a judging target selecting unit 121, an occurrence rate calculation unit 122, a fault judging unit 123, etc.

The judging target selecting unit 121 makes a selection as to whether the CH_num value and NG_num value read at the interval of the fixed timer (UET(IL)_ref) become the fault judging targets or not. To be specific, the judging target selecting unit 121, if the cumulative call count (CH num) is less than the predetermined threshold value (CH _num min), excludes the value read at that time from the fault judging target hereafter. This is because if the cumulative count is small, the accuracy of the judgment about the fault declines. Such being the case, "CH_num_min" is set to a value sufficient for a call sample count for making the judgment about the fault and is retained as an adjustable value beforehand in the memory etc.

Moreover, the judging target selecting unit 121, if the abnormal radio link count (RL_num) becomes less than the predetermined threshold value (RL_num_min), excludes the value read at that time from the fault judging target hereafter. This is because if the abnormal radio link count is small, it is difficult to judge whether it is the fault on the side of the base station device or the fault of the UE 5, and hence the accuracy of the judgment about the fault declines. This being the case, "RL_num_min" is set to a value sufficient for the radio link sample count for making the judgment about the fault and is previously retained as an adjustable value in the memory etc.

The judging target selecting unit 121, if deemed to be the fault judging target, transfers the CH_num value, the NG_num value and the RL_num value respectively to the occurrence rate calculation unit 122.

The occurrence rate calculation unit 122 calculates an abnormal call occurrence rate P in the following way on the basis of the respective values sent from the judging target selecting unit 121. The calculated abnormal call occurrence rate P is sent to the fault judging unit 123.

$$\mathtt{Abnormal\ call\ occurrence\ rate:\ P\ =\ NG\ num/CH\_num}$$

The fault judging unit 123 judges, based on the abnormal call occurrence rate P sent from the occurrence rate calculation unit 122, whether the fault occurs in the self-device or not. Specifically, the fault judging unit 123, when judging that the abnormal call occurrence rate P is greater than a threshold value P_NG previously retained in the adjustable manner in the memory etc, judges that the fault occurs in the self-device.

[Operational Example]

Next, an operational example of the mobile terminal (UE) in the third embodiment will be described.

The UE 5 performs the wireless communications with at least one of the plurality of base station devices 70-1, 70-2 and 70-3, corresponding to the location where the UE 5 exists. The radio signals transmitted from the base station device are received by the antenna 71, then amplified by the radio transmission unit 72, modulated by the wireless modulation/demodulation unit 73 and transmitted to the baseband processing unit 74. The baseband processing unit 74 executes the signal processing such as deinterleaving and channel decoding on the call-set signals, whereby the transport block is extracted. The thus-acquired transport block is transmitted to the data processing unit 76.

Moreover, in the baseband processing unit 74, the pilot symbol is detected from the received downlink signals, and the inner loop control using this pilot symbol is executed. The TPC bit obtained under this inner loop control is set in the uplink transmission signals subjected to the channel coding, interleaving and so on. The thus-generated uplink signals are frequency-converted in the radio transmission unit 72 and transmitted to the base station device from the antenna 71.

Further, in the UE 5, the outer loop control unit 91 executes the outer loop control. Namely, the outer loop control unit 91 updates the SIR increment/decrement value ($\Delta$sir) based on the CRCI per transport block sent from the CRC judging unit 87. The down link power control unit 90 of the baseband processing unit 74 is notified of this SIR increment/decrement value at the control timer (T_OL) cycle, and the SIR increment/decrement value is utilized for the inner loop control.

In the UE 5 in the third embodiment, the inner loop monitoring unit 101 and the fault detecting unit 75 provided in the baseband processing unit 74 detect the occurrence of the fault in the self-device.

The inner loop monitoring unit 101 receives the TPC bit as the result of the inner loop control at the slot cycle from the downlink power control unit 90 and acquires, based on this TPC bit, the cumulative call count (CH_num), the cumulative abnormal call count (NG_num) and the abnormal radio link count (RL_num), which are processed in the baseband processing unit 74.

The inner loop monitoring unit 101 compares the power increment/decrement value ($\Delta$Pow) updated corresponding to the input of the TPC bit with the previously-retained power increment/decrement threshold value ($\Delta$Pow_max), thereby obtaining a judgment count (TPC_NG value) with which the power increment/decrement is judged to be so large (larger than the power increment/decrement threshold value) at the fixed cycle (T_pow) and a judgment count (TPC_OK value) with which the power increment/decrement is judged not to be so large.

The inner loop monitoring unit 101, if the judgment count (TPC_NG value), with which the power increment/decrement is judged to be so large, is judged greater than the abnormality threshold value (TPC_NG_max) before the judgment count (TPC_OK value), with which the power increment/decrement is judged not to be so large, is judged to be greater than the normal threshold value (TPC_OK_max), counts the call at that time as the abnormal call (increments the NG_num value).

Moreover, the inner loop monitoring unit 101 counts the radio link count (RL_num) related to the calls deemed to be the abnormal calls so that the radio link is not dually counted by retaining the radio link numbers of the set calls deemed to be the abnormal calls.

The thus-cumulated CH_num value, NG_num value and RL_num value are read into the fault detecting unit 75 at the interval of the fixed time (UET(IL)_ref) and are thereafter initialized.

The fault detecting unit 75 detects the occurrence of the fault of the self-device on the basis of these respective values. For this operation, to begin with, the judging target selecting unit 121 excludes these values from the fault judging process target hereafter if the cumulative call count is less than the call count (CH_num_min) considered to be the minimum required in terms of making the judgment about the fault or if the abnormal radio link count is less than the count (RL_num_min) considered to be minimum required in terms of making the judgment about the fault.

If selected as the fault judging target, the occurrence rate calculation unit 122 calculates the abnormal call occurrence ratio P on the basis of the cumulative call count and the cumulative abnormal call count.

Finally, the fault judging unit 123, when judging that this abnormal call occurrence ratio P exceeds the predetermined threshold value (P_NG), judges that the fault occurs in the self-device.

<Operation and Effect in Third Embodiment>

Namely, in the mobile terminal (UE) in the third embodiment, the inner loop monitoring unit 101 and the fault detecting unit 75 provided in the baseband processing unit 74 detect the occurrence of the fault in the self-device.

In the inner loop monitoring unit 101 of the baseband processing unit 74, with respect to the set call (channel), the TPC bit obtained by the downlink power control unit 90 is inputted at the slot cycle, and a time addition of this TPC bit value is conducted (the power increment/decrement value ($\Delta$Pow)). As a result, the inner loop monitoring unit 101 counts the cumulative call count (CH_num value) of the calls set in the baseband processing unit 74, the abnormal call count (NG_num value) of the abnormal calls causing such a phenomenon that this power increment/decrement value extremely rises, and the not-overlapped radio link count (RL_num) when deemed to be the abnormal call.

The cumulative call count (CH_num value), the cumulative abnormal call count (NG_num value) and the abnormal radio link count (RL_num value), which are obtained by the baseband processing unit 74, are read into the fault detecting unit 75. The fault detecting unit 75 judges the fault in the self-device. This judgment involves selecting the cumulative call count and the cumulative abnormal call count each reaching the call count necessary for making the precise judgment about the fault, and involves using the abnormal call occurrence ratio calculated about each baseband processing unit.

Thus, in the mobile terminal (UE) according to the third embodiment, in the same way as in the base station device according to the first embodiment, the occurrence of the fault of the self-device is detected by use of the TPC bit as the output of the inner loop control in the baseband processing unit. In the mobile terminal, if the abnormal call often occurs between the mobile terminal and the single base station device, it can not be judged which side, the mobile terminal or the base station device, the fault occurs in, and therefore the data usable as the fault judging target is selected in a way that utilizes the radio link count when deemed to be abnormal call.

With this scheme, it is possible to detect the fault occurred in the channel estimation unit 83, the RAKE synthesizing unit 82 and the peripheral interfaces thereto after establishing the synchronization of the uplink signals.

Namely, according to the third embodiment, the inner loop monitoring unit 101 and the fault detecting unit 75 can detect such an in-depth fault in the signal processing unit. Further, on the occasion of detecting such a fault in the signal processing unit, there is neither the necessity of stopping the operation of the signal processing unit nor the decrease in operating rate.

[Fourth Embodiment]

The mobile terminal (UE)) performing the wireless communications with a base station device embracing the base station devices in the first embodiment and the second embodiment, will hereinafter be explained by way of a fourth embodiment. The mobile terminal in the third embodiment explained earlier judges the fault of the self-device by use of the TPC bit defined as the output as the result of the inner loop control. The mobile terminal in the fourth embodiment judges the fault of the self-device by employing the SIR increment/decrement value ($\Delta$sir) defined as the output as the result of the outer loop control.

[System Architecture]

The system architecture is the same as in the third embodiment illustrated in FIG. 14, and hence its description is omitted. The UE 5 in the fourth embodiment does not likewise restrict the function of the base station device.

[Configuration of Device]

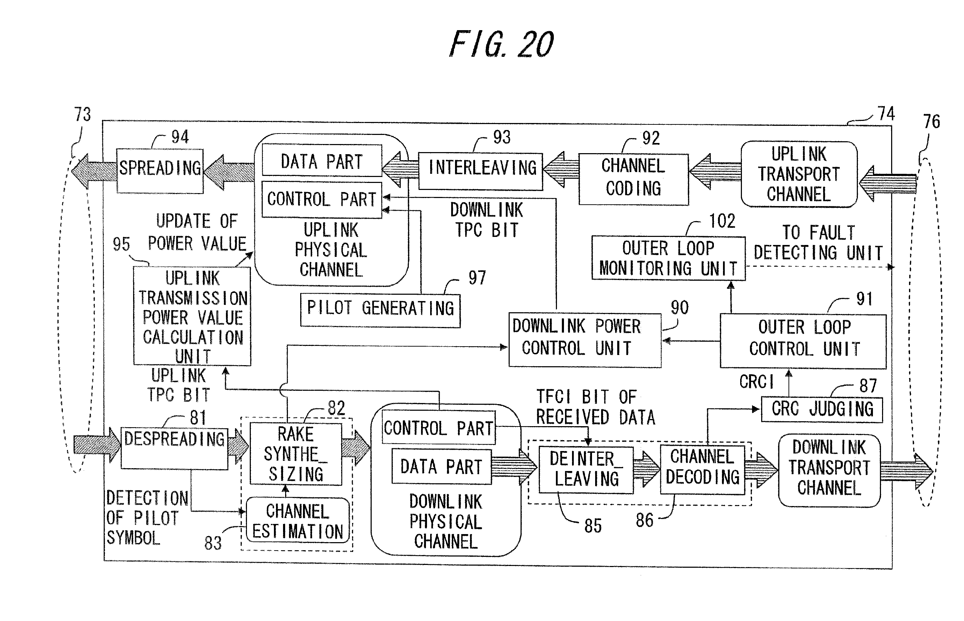

The mobile terminal (UE) in the fourth embodiment is different from that in the third embodiment in terms of only the function of the baseband processing unit 74, and therefore the description using FIG. 20 will hereinafter be focused on the function of the baseband processing unit 74. FIG. 20 is a block diagram showing a functional configuration of the baseband processing unit 74 in the fourth embodiment.

<Baseband Processing Unit>

The baseband processing unit 74 in the fourth embodiment includes an outer loop monitoring unit 102 that replaces the inner loop monitoring unit 101 in the third embodiment. The function units other than this outer loop monitoring unit 102 are the same as in the first embodiment, and their explanations are herein omitted.

«Outer Loop Monitoring Unit»

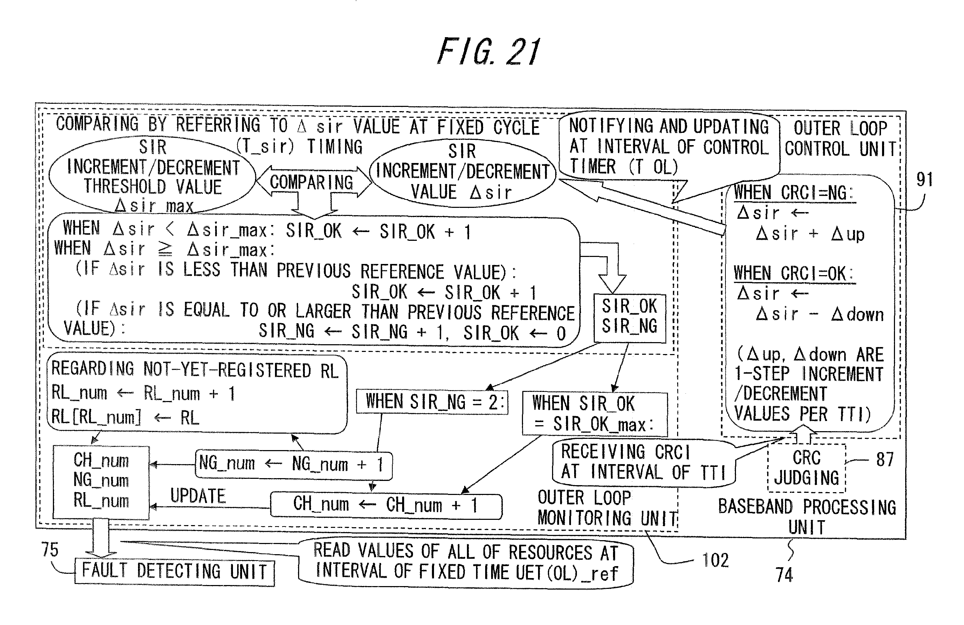

The outer loop monitoring unit 102 will hereinafter be described with reference to FIG. 21. FIG. 21 is a diagram showing a processing concept of the outer loop monitoring unit 102. The outer loop monitoring unit 102 executes detecting the faults in the predetermined function units as follows. The function units, of which the faults are to be detected by the outer loop monitoring unit 102, are exemplified such as the deinterleaving unit 85 and the channel decoding unit 86 as the processing units posterior to the downlink physical channel bit judgment.

In the fourth embodiment, the SIR increment/decrement value ($\Delta$sir) outputted from the outer loop control unit 91 is transferred to the downlink power control unit 90 and is also sent to the outer loop monitoring unit 102 at the control timer (T_OL) cycle. This SIR increment/decrement value is retained in the outer loop monitoring unit 102.

The outer loop monitoring unit 102 reads the SIR increment/decrement value (∆sir) at that point of time at the interval of the fixed time (T_sir), and compares this value with the SIR increment/decrement threshold value (∆sir_max) previously retained in the memory etc, thus updating the SIR OK value or the SIR NG value and further updating the CH_num value and the NG_num value. Such a process of the outer loop monitoring unit 102 is the same as the process of the outer loop monitoring unit 52 in the second embodiment, and hence the details thereof are omitted.

The outer loop monitoring unit 102 of the UE 5, in addition to the CH_num value and the NG_num value that are updated in the process of the outer loop monitoring unit 52 of the node B1 in the second embodiment, counts the abnormal radio link count (RL_num) in the following manner. Herein, the RL_num value, of which the initial value is "0", represents the radio link cumulative count of the radio links deemed to have the occurrence of the abnormality.

The outer loop monitoring unit 102 retains a radio link number about the set call deemed to be the abnormal call. The outer loop monitoring unit 102, if deemed to be the abnormal call, checks whether or not the radio link number of the set call has already been retained (registered), and, if not yet registered, increments the abnormal radio link count (RL_num) by "1", and registers the radio link number (rl) in the array RL [RL_num]. For instance, let "rl" be the radio link number of the set call if the SIR_NG value reaches SIR_NG max([2] is set in principle) before the SIR_OK value reaches SIR_OK_max, and, if "rl" is not retained in the array RL [k] (k = 0 through RL_num), the processing is carried out as below.

$$RL\_num \Leftarrow RL\_num + 1$$

$$RL [RL\_num] \Leftarrow rl$$

The radio link number, as explained in the third embodiment, specifies the information that specifies the base station device to which the UE 5 is connected and also the wireless area or the like. Note that the CH_num value and the NG_num value are also updated in the way as by the outer loop monitoring unit 52 of the node B1 in the second embodiment. The thus-updated CH_num value, NG_num value and RL_num value are employed by the fault detecting unit 75.

<Fault Detecting Unit>

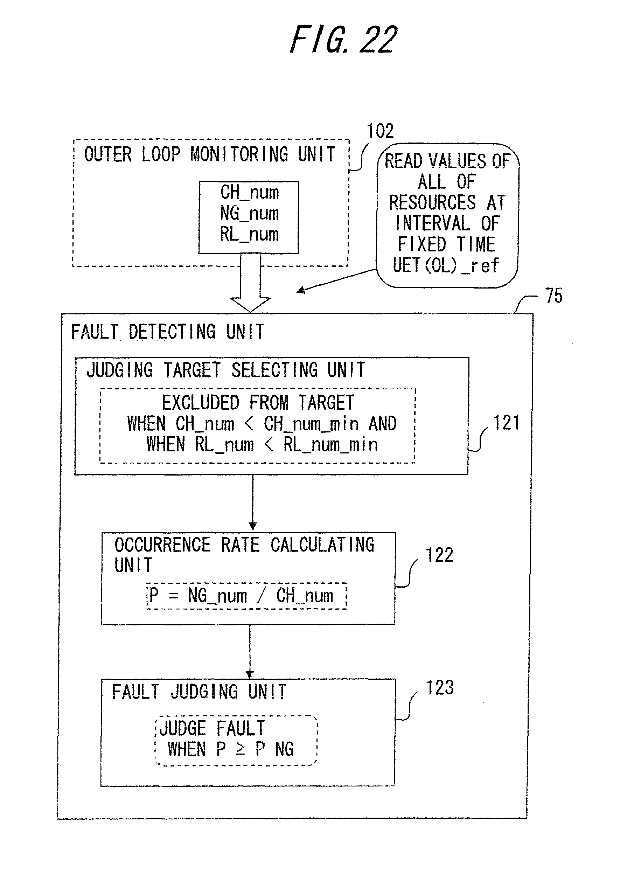

The fault detecting unit 75 reads the CH_num value, the NG_num value and the RL_num value at the interval of the fixed timer (UET(OL)_ref) from the outer loop monitoring unit 102 described above, and judges the fault in the self-device. FIG. 22 is a diagram showing a functional configuration of the fault detecting unit in the fourth embodiment.

The fault detecting unit 75 in the fourth embodiment is different from that in the third embodiment in terms of reading the respective values from the outer loop monitoring unit 102, but other processes are the same as in the third embodiment, and therefore the explanations thereof are herein omitted.

[Operational Example]

An operational example of the mobile terminal (UE) in the fourth embodiment will be described.

The mobile terminal (UE) in the fourth embodiment judges the fault in the self-device by use of the SIR increment/decrement value (∆sir) as the output of the outer loop control in the outer loop control unit 91. Namely, in the mobile terminal in the fourth embodiment, the outer loop monitoring unit 102 and the fault detecting unit 75 provided in the baseband processing unit 74 detect the fault of the self-device.

The outer loop monitoring unit 102 refers to the SIR increment/decrement value (∆sir) outputted from the outer loop control unit 91 at the fixed cycle (T_sir) and acquires, based on this SIR increment/decrement value (∆sir), the cumulative call count (CH_num), the cumulative abnormal call count (NG_num) and the abnormal radio link count (RL_num), which are processed in the baseband processing unit.

The outer loop monitoring unit 102 compares the SIR increment/decrement value (∆sir) with the previously-retained SIR increment/decrement threshold value (∆sir_max), thereby obtaining a judgment count (SIR_NG value) with which the SIR increment/decrement value is judged, at the fixed cycle (T_sir), to be so large (larger than the SIR increment/decrement threshold value) and judged much larger than the SIR increment/decrement value when referred to last time and also a judgment count (SIR_OK value) with which the SIR increment/decrement value is not judged so.

The outer loop monitoring unit 102, if a judgment count (TPC_NG value), with which the SIR increment/decrement value is judged to be so-consecutively-large, is judged greater than the abnormality threshold value (SIR_NG_ max ([2] is adopted in the fourth embodiment)) before this SIR_OK value is judged larger than the normal threshold value (SIR_OK_max), counts the call at that time as an abnormal call (the NG num value is incremented).

Further, the outer loop monitoring unit 102. counts the radio link count (RL_num) related to the calls deemed to be the abnormal calls so that the same radio link is not dually counted by retaining the radio link numbers of the set calls deemed to be the abnormal calls.

The thus-cumulated NG_num value, CH_num value and RL_num value are read into the fault detecting unit 75 at the interval of the fixed time (UET(OL)_ref) and are thereafter initialized.

The fault detecting unit 75 detects the occurrence of the fault of the self-device on the basis of these respective values in the same way as in the third embodiment.

<Operation and Effect in Fourth Embodiment>

Namely, in the mobile terminal (UE) in the fourth embodiment, the outer loop monitoring unit 102 and the fault detecting unit 75 provided in the baseband processing unit 74 detect the occurrence of the fault in the self-device.

The outer loop monitoring unit 102, with respect to the set call (channel), monitors the state where the SIR increment/decrement value (Δsir) outputted under the outer loop control of the outer loop control unit 91 extremely consecutively rises and also the normal state other than this state (the SIR_NG value and the SIR_OK value). Counted further are the cumulative call count (CH_num value) of the set calls, the cumulative abnormal call count (NG num value) of the abnormal calls causing the state in which this SIR increment/decrement value extremely consecutively rises and the not-overlapped radio link count (RL_num) when deemed to be the abnormal call, respectively.

The cumulative call count (CH_num value), the cumulative abnormal call count (NG_num value) and the abnormal radio link count (RL_num value), which are obtained in the baseband processing unit 74, are read into the fault detecting unit 75, whereby the fault detecting unit 75 judges the fault of the self-device in the same way as in the third embodiment.

Thus, in the mobile terminal (UE) in the fourth embodiment, the fault of the self-device is judged by employing the SIR increment/decrement value defined as the output of the outer loop control unit 91.

With this operation, it is feasible to detect the faults occurred in the decoding processing units (the deinterleaving unit 85, the channel decoding unit 86) and the peripheral interfaces posterior to the bit judgment of the reception (received call) downlink physical channel.

Namely, according to the fourth embodiment, the outer loop monitoring unit 102 and the fault detecting unit 75 can detect the in-depth faults in such signal processing units. Further, on the occasion of detecting such a fault in the signal processing unit, there is neither the necessity of stopping the operation of the signal processing unit nor the decrease in operating rate.

**Claims**

1. A fault detecting device for a base station including a plurality of baseband processing means each executing signal processing of a set call allocated thereto, comprising:

   a plurality of monitoring means, provided in each of the plurality of baseband processing means, counting a cumulative call count and an abnormal call count therein, which are set in the target baseband processing means, based on information used for transmission power control related to uplink channel of a set call allocated to the target baseband processing means; and
   a judging means collecting the abnormal call count and the cumulative call count of each of the plurality of baseband processing means that are obtained by each of the plurality of monitoring means, and judging a fault-occurred baseband processing means in the plurality of baseband processing means.

2. A fault detecting device for a base station according to Claim 1, wherein the information used for the transmission power control is transmission power control information set in downlink signals organizing the set call allocated to the target baseband processing means.

3. A fault detecting device for a base station according to Claim 1 or 2, wherein each of the plurality of monitoring means includes:

   a calculating means calculating a transmission power increment/decrement value corresponding to the transmission power control information;

a counting means referring to the transmission power increment/decrement value at a predetermined cycle, and counting an abnormality count with which the transmission power increment/decrement value when referred to becomes larger than a predetermined threshold value and a normality count other than the abnormality count, respectively; and

a judging means judging, as an abnormal call, such a call that the abnormality count becomes larger than a predetermined threshold value before the normality count becomes larger than a predetermined threshold value, based on the abnormality count and the normality count obtained by the counting means.

4. A fault detecting device for a base station according to any of the preceding claims, wherein the transmission power control information is a TPC bit outputted based on a pilot signal contained in the uplink signals organizing the set call.

5. A fault detecting device for a base station according to any of the preceding claims, wherein the judging means includes:

a selecting means selecting, as a fault judging target, the baseband processing means, of which the cumulative call count obtained by each of the plurality of monitoring means is larger than a predetermined call count threshold value, in the plurality of baseband processing means; and

an occurrence rate calculating means calculating an abnormal call occurrence rate defined as a rate of the abnormal call count to the cumulative call count with respect to each of the plurality of baseband processing means selected by the selecting means, and

wherein the judging means judges, as the fault-occurred baseband processing means, the baseband processing means, of which the abnormal call occurrence rate calculated by the occurrence rate calculating means is larger than a predetermined occurrence rate threshold value, from within the baseband processing means selected by the selecting means.

6. A fault detecting device for a base station according to Claim 5, wherein the judging means further includes:

a predicting means predicting, as the fault baseband processing means, the baseband processing means of which the abnormal call occurrence rate calculated by the occurrence rate calculating means is larger than a predetermined abnormal call occurrence rate threshold value, further predicting, as the normal baseband processing means, the baseband processing means of which the abnormal call occurrence rate is smaller than a predetermined normal call occurrence rate threshold value, and acquiring the number of the fault baseband processing means and the number of the normal baseband processing means, and

wherein if the number of the fault baseband processing means is smaller than a predetermined fault rate threshold value of the number of the fault baseband processing means to the number of the baseband processing means selected as the fault judging target, and if the number of the normal baseband processing means is larger than a predetermined normality rate threshold value of the number of the normal baseband processing means to the number of the baseband processing means selected as the fault judging target, the judging means judges the fault-predicted baseband processing means as the fault-occurred baseband processing means.

7. A fault detecting device for a base station according to any of the preceding claims, wherein the information used for the transmission power control is an increment/decrement value of a signal-to-interference power ratio used for the transmission power control with respect to uplink channel of a set call allocated to the target baseband processing means.

8. A fault detecting device for a base station according to Claim 7, wherein each of the plurality of monitoring means includes:

a counting means referring to the increment/decrement value of the signal-to-interference power ratio at a predetermined cycle, and counting an abnormality count with which the increment/decrement value of the signal-to-interference power ratio when referred to is larger than when referred to last time and larger than a predetermined threshold value, and a normality count other than the abnormality count, respectively; and

a judging means judging, as an abnormal call, such a call that the abnormality count becomes larger than a predetermined threshold value before the normality count becomes larger a predetermined threshold value, based on the abnormality count and the normality count obtained by the counting means.

**9.** A fault detecting device detecting a fault of a mobile terminal performing wireless communications in a way that switches over a base station becoming a communication partner, comprising:

a monitoring means counting a cumulative call count, an abnormal call count therein and an abnormal radio link count that are set in baseband processing means, based on information used for transmission power control related to a downlink channel between the mobile terminal itself and the base station as the communication partner; and
a judging means judging a fault of the mobile terminal itself based on the abnormal call count, the cumulative call count and the abnormal radio link count obtained by the monitoring means.

**10.** A fault detecting device for a mobile terminal according to Claim 9, wherein the information used for the transmission power control is transmission power control information set in uplink signals transmitted to the base station becoming the communication partner.

**11.** A fault detecting device for a mobile terminal according to Claim 9 or 10, wherein the monitoring means includes:

a calculating means calculating a transmission power increment/decrement value corresponding to the transmission power control information;
a counting means referring to the transmission power increment/decrement value at a predetermined cycle, and counting an abnormality count with which the transmission power increment/decrement value when referred to becomes larger than a predetermined threshold value and a normality count other than the abnormality count, respectively; and
a judging means judging, as an abnormal call, such a call that the abnormality count becomes larger than a predetermined threshold value before the normality count gets larger than a predetermined threshold value, based on the abnormality count and the normality count obtained by the counting means.

**12.** A fault detecting device for a mobile terminal according to Claim 9, 10 or 11, wherein the transmission power control information is a TPC bit outputted based on a pilot signal contained in the downlink signals from the base station becoming the communication partner.

**13.** A fault detecting device for a mobile terminal according to Claim 9, 10, 11 or 12, wherein the judging means includes:

an occurrence rate calculating means calculating, if the cumulative call count obtained by the monitoring means is larger than a predetermined call count threshold value and if the abnormal radio link count is larger than a predetermined link count threshold value, an abnormal call occurrence rate defined as a rate of the abnormal call count to the cumulative call count, and

wherein the judging means, if the abnormal call occurrence rate calculated by the occurrence rate calculating means is larger than a predetermined abnormal call occurrence rate threshold value, judges that a fault occurs in the mobile terminal itself.

**14.** A fault detecting device for a mobile terminal according to Claim 9, 10, 11 or 12, wherein the information used for the transmission power control is an increment/decrement value of a signal-to-interference power ratio used for the transmission power control with respect to a downlink channel between the mobile terminal itself and the base station becoming the communication partner.

**15.** A fault detecting device for a mobile terminal according to Claim 14, wherein the monitoring means includes:

a counting means referring to the increment/decrement value of the signal-to-interference power ratio at a predetermined cycle, and counting an abnormality count with which the increment/decrement value of the signal-to-interference power ratio when referred to is larger than when referred to last time and larger than a predetermined threshold value, and a normality count other than the abnormality count, respectively; and
a judging means judging, as an abnormal call, such a call that the abnormality count becomes larger than a predetermined threshold value before the normality count becomes larger a predetermined threshold value, based on the abnormality count and the normality count obtained by the counting means.

**16.** A fault detecting method detecting a fault of a base station device including a plurality of baseband processing means each executing signal processing of a set call allocated thereto, comprising:

a monitoring step of counting, for each of the plurality of baseband processing means, a cumulative call count and an abnormal call count therein, which are set in the target baseband processing means, based on information used for transmission power control related to uplink channel of a set call allocated to the target baseband processing means; and

a judging step of respectively collecting the abnormal call count and the cumulative call count of each of the plurality of baseband processing means that are obtained in the monitoring step, and judging a fault-occurred baseband processing means in the plurality of baseband processing means.

17. A fault detecting method detecting a fault of a mobile terminal performing wireless communications in a way that switches over a base station becoming a communication partner, comprising:

a monitoring step of counting a cumulative call count, an abnormal call count therein and an abnormal radio link count that are set in baseband processing means, based on information used for transmission power control related to a downlink channel between the mobile terminal itself and the base station as the communication partner; and

a judging step of judging a fault of the mobile terminal itself based on the abnormal call count, the cumulative call count and the abnormal radio link count obtained in the monitoring step.

*FIG. 1*

EP 1 890 407 A2

# FIG. 2

EP 1 890 407 A2

FIG. 3

FIG. 3

# FIG. 4

COMPARING BY REFERRING TO △Pow VALUE
AT FIXED CYCLE (T_pow) TIMING

POWER
INCREMENT/DECREMENT
THRESHOLD VALUE
△Pow_max

COMPARING

POWER
INCREMENT/DECREMENT
VALUE △Pow

UPDATE

DOWNLINK Physical Channel
TPC bit VALUE
· WHEN TPC = 1:
    △Pow ← △Pow + 1
· WHEN TPC = 0:
    △Pow ← △Pow − 1

INITIALIZE
△Pow ← 0

WHEN △Pow ≦ △Pow_max:
TPC_OK ← TPC_OK + 1
WHEN △Pow > △Pow_max:
TPC_NG ← TPC_NG + 1

UPDATE

TPC_OK
TPC_NG

INPUT TPC BIT VALUE
AT EVERY SLOT CYCLE

WHEN TPC_NG
= TPC_NG_max:

WHEN TPC_OK
= TPC_OK_max:

INITIALIZE
TPC_OK ← 0
TPC_NG ← 0

CH_num
NG_num

NG_num ← NG_num + 1

UPLINK POWER
CONTROL UNIT

51        30

UPDATE

CH_num ← CH_num + 1

BASEBAND PROCESSING
UNIT (1)

INNER LOOP MONITORING UNIT

19

BASEBAND RESOURCE MANAGEMENT UNIT

READ VALUES OF ALL OF RESOURCES AT
INTERVAL OF FIXED TIME T(IL)_ref

10

EP 1 890 407 A2

FIG. 5

EP 1 890 407 A2

# FIG. 6

```
BASEBAND              BASEBAND                    BASEBAND
PROCESSING            PROCESSING        51        PROCESSING              READ VALUES OF
UNIT (1)             UNIT (2)                     UNIT (N)                ALL OF
                                                                         RESOURCES AT
Inner Loop           Inner Loop                   Inner Loop             INTERVAL OF
MONITORING           MONITORING                   MONITORING             FIXED TIME
  CH_num               CH_num         • • • • •      CH_num               T(IL)_ref
  NG_num               NG_num                        NG_num
```

19

```
                                                                    BASEBAND
CH_num[1]            CH_num[2]                   CH_num[N]           RESOURCE
NG_num[1]           NG_num[2]       • • • • • •  NG_num[N]           MANAGEMENT UNIT

                                                                    RESOURCE COUNT:
JUDGING TARGET SELECTING UNIT                                              N
    EXCLUDE RESOURCE LEADING TO                      61
      CH_num[i] < CH_num_min                                        JUDGING TARGET
    FROM RESOURCE JUDGING TARGET                                    RESOURCE COUNT
                                                                       (N — D)

                                                                    OCCURRENCE
  P[1]              P[2]          • • • • • •      P[N]              RATE          62
                                                                    CALCULATION
       P[i] = NG_num[i] / CH_num[i]                                 UNIT

PREJUDGING UNIT                                                                   63
 FAULT  PREDICTIVE  RESOURCE        NORMAL PREDICTIVE
 COUNT LEADING TO P[i] ≥ P NG       RESOURCE COUNT LEADING
                                    TO P[i] < P OK

FAULT RESOURCE  JUDGING UNIT                                                      64
 FAULT PREDICTIVE RESOURCE          NORMAL PREDICTIVE RESOURCE
 COUNT IS EQUAL TO OR SMALLER       COUNT IS EQUAL TO OR LARGER
 THAN (N — D) × R_NG/100            THAN (N — D) × R_OK/100

 RESOURCE INCLUDED IN FAULT PREDICTIVE RESOURCE COUNT
    WHEN SATISFYING ABOVE TWO CONDITIONS IS JUDGED
              AS RESOURCE OF [FAULT OCCURRENCE]
```

# FIG. 7

EP 1 890 407 A2

## FIG. 8

DATA PART

CONTROL PART ← UPLINK TPC BIT

DOWNLINK PHYSICAL CHANNEL

OUTER LOOP MONITORING UNIT — 52

NOTIFYING AND UPDATING AT INTERVAL OF CONTROL TIMER (T_OL)

— 10

2

RNC

WHEN CRCI=NG:
$\triangle sir \leftarrow \triangle sir + \triangle up$

WHEN CRCI=OK:
$\triangle sir \leftarrow \triangle sir - \triangle down$

($\triangle up$, $\triangle down$ ARE 1-STEP INCREMENT /DECREMENT VALUES PER TTI)

UPLINK POWER CONTROL UNIT

42 — TPC BIT JUDGING

30

SIR INITIAL VALUE SIR_ini

SIR INCREMENT /DECREMENT VALUE $\triangle sir$

12

41

SIR MEASURING

RECEIVED POWER, SIR MEASURING → SIR MEASURED VALUE SIR_mes

SIR TARGET VALUE SIR_tag

UPDATE OF SIR TARGET VALUE SIR TARGET VALUE CALCULATION

RAKE SYNTHESIZING — 22

COMPARING — 43

UPLINK TRANSPORT CHANNEL

RECEIVING CRCI AT INTERVAL OF TTI

EP 1 890 407 A2

## FIG. 9

COMPARING BY REFERRING TO △sir VALUE AT FIXED CYCLE (T_sir) TIMING

SIR INCREMENT/DECREMENT THRESHOLD VALUE △sir_max

COMPARING

SIR INCREMENT/DECREMENT VALUE △sir

WHEN △sir < △sir_max:
SIR_OK ← SIR_OK + 1
WHEN △sir ≧ △sir_max:
(IF △sir IS LESS THAN PREVIOUS REFERENCE VALUE)
SIR_OK ← SIR_OK + 1
(IF △sir IS EQUAL TO OR LARGER THAN PREVIOUS REFERENCE VALUE):
SIR_NG ← SIR_NG + 1, SIR_OK ← 0

SIR_OK
SIR_NG

WHEN SIR_NG = 2:

NG_num ← NG_num + 1

WHEN SIR_OK = SIR_OK_max:

CH_num
NG_num

UPDATE

CH_num ← CH_num + 1

OUTER LOOP MONITORING UNIT

BASEBAND RESOURCE MANAGEMENT

READ VALUES OF ALL OF RESOURCES AT INTERVAL OF FIXED TIME T(OL)_ref

NOTIFYING AND UPDATING AT INTERVAL OF CONTROL TIMER (T_OL)

UPLINK POWER CONTROL UNIT

UPLINK TRANSPORT CHANNEL

BASEBAND PROCESSING UNIT (1)

WHEN CRCI=NG:
△sir ← △sir + △up

WHEN CRCI=OK:
△sir ← △sir - △down

(△up, △down ARE 1-STEP INCREMENT /DECREMENT VALUES PER TTI)

RECEIVING CRCI AT INTERVAL OF TTI

EP 1 890 407 A2

# FIG. 10

FIXED PERIOD T_sir (SEC)

OK STATE

NG STATE

OK STATE

OK STATE

$\triangle$ sir

$\triangle$ sir_max

0

ESTABLISHMENT OF UPLINK SYNCHRONIZATION

ELAPSE OF TIME

O.L. CONTROL

O.L. CONTROL

O.L. CONTROL

O.L. CONTROL

O.L. CONTROL

SIR_OK = 1
SIR_NG = 0

SIR_OK = 0
SIR_NG = 1

SIR_OK = 1
SIR_NG = 1

SIR_OK = 2
SIR_NG = 1

EP 1 890 407 A2

# FIG. 11

FIXED PERIOD T_sir (SEC)

OK STATE   OK STATE   NG STATE   NG STATE

$\Delta sir$

$\Delta sir\_max$

0

ESTABLISHMENT OF UPLINK SYNCHRONIZATION

ELAPSE OF TIME

O.L. CONTROL   O.L. CONTROL   O.L. CONTROL

SIR_OK = 1   SIR_OK = 2   SIR_OK = 0   SIR_OK = 0
SIR_NG = 0   SIR_NG = 0   SIR_NG = 1   SIR_NG = 2

EP 1 890 407 A2

# FIG. 12

EP 1 890 407 A2

EP 1 890 407 A2

# FIG. 13

```
┌──────────────┐  ┌──────────────┐       ┌──────────────┐   ╭──────────────╮
│  BASEBAND    │  │  BASEBAND    │  52   │  BASEBAND    │   │ READ VALUES OF│
│ PROCESSING   │  │ PROCESSING   │       │ PROCESSING   │   │    ALL OF     │
│  UNIT (1)    │  │  UNIT (2)    │       │  UNIT (N)    │   │  RESOURCES AT │
│┌────────────┐│  │┌────────────┐│       │┌────────────┐│   │   INTERVAL OF │
││Outer Loop  ││  ││Outer Loop  ││ ..... ││Outer Loop  ││   │   FIXED TIME  │
││MONITORING  ││  ││MONITORING  ││       ││MONITORING  ││   │   T(OL)_ref   │
││┌──────────┐││  ││┌──────────┐││       ││┌──────────┐││   ╰──────────────╯
│││ CH_num   │││  │││ CH_num   │││       │││ CH_num   │││
│││ NG_num   │││  │││ NG_num   │││       │││ NG_num   │││
││└──────────┘││  ││└──────────┘││       ││└──────────┘││
│└────────────┘│  │└────────────┘│       │└────────────┘│
└──────────────┘  └──────────────┘       └──────────────┘
```

— 19

BASEBAND
RESOURCE
MANAGEMENT UNIT

```
┌──────────────┐  ┌──────────────┐       ┌──────────────┐
│ CH_num[1]    │  │ CH_num[2]    │ ..... │ CH_num[N]    │
│ NG_num[1]    │  │ NG_num[2]    │       │ NG_num[N]    │
└──────────────┘  └──────────────┘       └──────────────┘
```

RESOURCE COUNT:
N

JUDGING TARGET SELECTING UNIT
EXCLUDE RESOURCE LEADING TO
$CH\_num[i] < CH\_num\_min$
FROM RESOURCE JUDGING TARGET           61

JUDGING TARGET
RESOURCE COUNT
(N − D)

```
┌──────┐        ┌──────┐          ┌──────┐
│ P[1] │        │ P[2] │  ......  │ P[N] │
└──────┘        └──────┘          └──────┘
```

OCCURRENCE
RATE          62
CALCULATION
UNIT

$P[i] = NG\_num[i] / CH\_num[i]$

PREJUDGING UNIT                                             63

FAULT PREDICTIVE RESOURCE
COUNT LEADING TO $P[i] \geq P\ NG$

NORMAL PREDICTIVE
RESOURCE COUNT LEADING
TO $P[i] < P\ OK$

FAULT RESOURCE JUDGING UNIT                                 64

FAULT PREDICTIVE RESOURCE
COUNT IS EQUAL TO OR SMALLER
THAN $(N − D) \times R\_NG/100$

NORMAL PREDICTIVE RESOURCE
COUNT IS EQUAL TO OR LARGER
THAN $(N − D) \times R\_OK/100$

RESOURCE INCLUDED IN FAULT PREDICTIVE RESOURCE COUNT
WHEN SATISFYING ABOVE TWO CONDITIONS IS JUDGED
AS RESOURCE OF [FAULT OCCURRENCE]

37

# FIG. 14

70-1

BASE STATION
DEVICE

2

RNC

70-2

BASE STATION
DEVICE

70-3

BASE STATION
DEVICE

5

# FIG. 15

EP 1 890 407 A2

# FIG. 16

## FIG. 17

DATA PART

CONTROL PART ← DOWNLINK TPC BIT

UPLINK PHYSICAL CHANNEL

INNER LOOP MONITORING UNIT — 101

NOTIFYING AND UPDATING AT INTERVAL OF CONTROL TIMER (T_OL)

74

91

DOWNLINK POWER CONTROL UNIT

112 — TPC BIT JUDGING

90

WHEN CRCI=NG:
$\triangle sir \leftarrow$
$\triangle sir + \triangle up$

WHEN CRCI=OK:
$\triangle sir \leftarrow$
$\triangle sir - \triangle down$

($\triangle up$, $\triangle down$ ARE 1-STEP INCREMENT /DECREMENT VALUES PER TTI)

111 — SIR MEASURING

SIR INITIAL VALUE SIR_ini

RECEIVED POWER、 SIR MEASURING

SIR MEASURED VALUE SIR_mes

SIR INCREMENT /DECREMENT VALUE $\triangle sir$

SIR TARGET VALUE SIR_tag

UPDATE OF SIR TARGET VALUE SIR TARGET VALUE CALCULATION

RAKE SYNTHESIZING — 82

113

COMPARING

RECEIVING CRCI AT INTERVAL OF TTI

CRC JUDGING — 87

EP 1 890 407 A2

# FIG. 18

COMPARING BY REFERRING TO △ Pow VALUE
AT FIXED CYCLE (T_pow) TIMING

POWER INCREMENT/DECREMENT THRESHOLD VALUE △Pow_max

COMPARING

POWER INCREMENT/DECREMENT VALUE △Pow

UPDATE

DOWNLINK Physical Channel
TPC bit VALUE
· WHEN TPC = 1:
    △Pow ← △Pow + 1
· WHEN TPC = 0:
    △Pow ← △Pow − 1

WHEN △Pow ≦ △Pow_max:
    TPC_OK ← TPC_OK + 1
WHEN △Pow > △Pow_max:
    TPC_NG ← TPC_NG + 1

UPDATE

INITIALIZE
△Pow ← 0

TPC_OK
TPC_NG

INPUT TPC BIT VALUE
AT EVERY SLOT CYCLE

REGARDING
NOT-YET-REGISTERED RL
RL_num ← RL_num + 1
RL[RL_num] ← RL

WHEN TPC_NG
= TPC_NG_max:

WHEN TPC_OK
= TPC_OK_max:

DOWNLINK POWER
CONTROL UNIT

101

90

CH_num
NG_num
RL_num

NG_num ← NG_num + 1

INITIALIZE
TPC_OK ← 0
TPC_NG ← 0

CH_num ← CH_num + 1

UPDATE

INNER LOOP MONITORING UNIT

BASEBAND PROCESSING
UNIT

75

FAULT DETECTING UNIT

READ VALUES OF ALL OF RESOURCES AT
INTERVAL OF FIXED TIME UET(IL)_ref

74

EP 1 890 407 A2

# FIG. 19

```
┌─────────────────────────────────────────────┐
│ INNER LOOP MONITORING UNIT          ╮ 101    │
│                                              │
│            ┌──────────────┐                  │
│            │   CH_num     │                  │
│            │   NG_num     │                  │
│            │   RL_num     │                  │
│            └──────────────┘                  │
└─────────────────────────────────────────────┘
```

(READ VALUES OF ALL OF RESOURCES AT INTERVAL OF FIXED TIME UET(OL)_ref)

─ 75

FAULT DETECTING UNIT

JUDGING TARGET SELECTING UNIT

EXCLUDED FROM TARGET
WHEN CH_num < CH_num_min AND
WHEN RL_num < RL_num_min

121

OCCURRENCE RATE CALCULATING UNIT

$P = NG\_num / CH\_num$

122

FAULT JUDGING UNIT

JUDGE FAULT
WHEN $P \geq P\ NG$

123

**FIG. 20**

UPLINK TRANSPORT CHANNEL

CHANNEL CODING — 92

INTERLEAVING — 93

DOWNLINK TPC BIT

UPLINK PHYSICAL CHANNEL
- DATA PART
- CONTROL PART

PILOT GENERATING — 97

SPREADING — 94

UPDATE OF POWER VALUE

UPLINK TRANSMISSION POWER VALUE CALCULATION UNIT — 95

UPLINK TPC BIT — 81

DESPREADING

DETECTION OF PILOT SYMBOL

OUTER LOOP MONITORING UNIT — 102

TO FAULT DETECTING UNIT

OUTER LOOP CONTROL UNIT — 91

CRCI

CRC JUDGING — 87

DOWNLINK POWER CONTROL UNIT — 90

TFCI BIT OF RECEIVED DATA

DOWNLINK PHYSICAL CHANNEL
- CONTROL PART
- DATA PART

RAKE SYNTHE_SIZING — 82

CHANNEL ESTIMATION — 83

DEINTER_LEAVING — 85

CHANNEL DECODING — 86

DOWNLINK TRANSPORT CHANNEL

74
76
73

44

## FIG. 21

OUTER LOOP CONTROL UNIT — 91

COMPARING BY REFERRING TO △sir VALUE AT FIXED CYCLE (T_sir) TIMING

NOTIFYING AND UPDATING AT INTERVAL OF CONTROL TIMER (T OL)

SIR INCREMENT/DECREMENT THRESHOLD VALUE △sir_max  ⟷ COMPARING ⟷  SIR INCREMENT/DECREMENT VALUE △sir

WHEN △sir < △sir_max: SIR_OK ← SIR_OK + 1
WHEN △sir ≧ △sir_max:
  (IF △sir IS LESS THAN PREVIOUS REFERENCE VALUE):
                    SIR_OK ← SIR_OK + 1
  (IF △sir IS EQUAL TO OR LARGER THAN PREVIOUS REFERENCE VALUE):   SIR_NG ← SIR_NG + 1, SIR_OK ← 0

SIR_OK
SIR_NG

WHEN CRCI=NG:
  △sir ←
     △sir + △up

WHEN CRCI=OK:
  △sir ←
     △sir − △down

(△up, △down ARE 1-STEP INCREMENT /DECREMENT VALUES PER TTI)

REGARDING NOT-YET-REGISTERED RL
RL_num ← RL_num + 1
RL[RL_num] ← RL

WHEN SIR_NG = 2:

WHEN SIR_OK = SIR_OK_max:

RECEIVING CRCI AT INTERVAL OF TTI

CRC JUDGING — 87

CH_num
NG_num
RL_num

NG_num ← NG_num + 1

CH_num ← CH_num + 1

UPDATE

OUTER LOOP MONITORING UNIT — 102

BASEBAND PROCESSING UNIT — 74

75 — FAULT DETECTING UNIT

READ VALUES OF ALL OF RESOURCES AT INTERVAL OF FIXED TIME UET(OL)_ref

EP 1 890 407 A2

# FIG. 22

OUTER LOOP MONITORING UNIT — 102

CH_num
NG_num
RL_num

READ VALUES OF
ALL OF
RESOURCES AT
INTERVAL OF
FIXED TIME
UET(OL)_ref

— 75

FAULT DETECTING UNIT

JUDGING TARGET SELECTING UNIT

EXCLUDED FROM TARGET
WHEN CH_num < CH_num_min AND
WHEN RL_num < RL_num_min

— 121

OCCURRENCE RATE CALCULATING
UNIT

$P = NG\_num / CH\_num$

— 122

FAULT JUDGING UNIT

JUDGE FAULT
WHEN $P \geq P$ NG

— 123

# FIG. 23

EP 1 890 407 A2

# FIG. 24

EP 1 890 407 A2

## FIG. 25

DATA PART

CONTROL PART

DOWNLINK
PHYSICAL
CHANNEL

UPLINK
TPC BIT

UPLINK POWER CONTROL UNIT

42 — TPC BIT
JUDGING

SIR INITIAL
VALUE SIR_ini

30

NOTIFYING AND
UPDATING AT
INTERVAL OF CONTROL
TIMER (T OL)

10

2

RNC

WHEN CRCI=NG:
$\triangle sir \leftarrow$
$\triangle sir + \triangle up$

WHEN CRCI=OK:
$\triangle sir \leftarrow$
$\triangle sir - \triangle down$

($\triangle up$, $\triangle down$ ARE
1-STEP INCREMENT
/DECREMENT VALUES
PER TTI)

41

RECEIVED
POWER、
SIR
MEASURING

SIR
MEASURED VALUE
SIR_mes

SIR
INCREMENT
/DECREMENT
VALUE $\triangle sir$

SIR TARGET
VALUE
SIR_tag

UPDATE OF SIR
TARGET VALUE

12

RAKE
SYNTHESIZING

22

COMPARING

UPLINK
TRANSPORT
CHANNEL

RECEIVING CRCI
AT INTERVAL
OF TTI

EP 1 890 407 A2

**EP 1 890 407 A2**

**REFERENCES CITED IN THE DESCRIPTION**

**Patent documents cited in the description**

- JP 2004364323 A